# EUROPEAN PATENT SPECIFICATION

(11) **EP 4 631 196 B1**
(45) Date of publication and mention of the grant of the patent: **07.10.2026**
(21) Application number: 23828853.4
(22) Date of filing: 15.11.2023
(51) Int. Cl.: H04L 1/1607, H04L 1/1867

(54) **RATE-SPLITTING MULTIPLE ACCESS MESSAGING WITH REPETITION**
RATENTEILUNGS-NACHRICHTENÜBERMITTLUNG MIT MEHRFACHZUGRIFF UND WIEDERHOLUNG
MESSAGERIE À ACCÈS MULTIPLE ET RÉPARTITION DE DÉBIT AVEC RÉPÉTITION

(30) Priority: 07.12.2022 US 202218063034
(43) Date of publication of application: 15.10.2025
(73) Proprietor: QUALCOMM INCORPORATED, San Diego, California 92121-1714 (US)
(72) Inventor: ELSHAFIE, Ahmed, San Diego, California 92121-1714 (US); ZEWAIL, Ahmed Abdelaziz Ibrahim Abdelaziz, San Diego, California 92121-1714 (US); ABOTABL, Ahmed Attia, San Diego, California 92121-1714 (US); ZORGUI, Marwen, San Diego, California 92121-1714 (US); CHEN, Wanshi, San Diego, California 92121-1714 (US); LY, Hung Dinh, San Diego, California 92121-1714 (US)
(74) Representative: Bardehle Pagenberg Partnerschaft mbB Patentanwälte Rechtsanwälte
(86) International application number: PCT/US2023/079801
(87) International publication number: WO 2024/123511

(56) References cited:
- JOUDEH HAMDI ET AL: "Robust Transmission in Downlink Multiuser MISO Systems: A Rate-Splitting Approach", IEEE TRANSACTIONS ON SIGNAL PROCESSING, IEEE, USA, vol. 64, no. 23, 1 December 2016 (2016-12-01), pages 6227 - 6242, XP011624867, ISSN: 1053-587X, [retrieved on 20161004], DOI: 10.1109/TSP.2016.2591501
- SPREADTRUM COMMUNICATIONS: "Consideration on physical layer procedures", 11 November 2018, 3GPP DRAFT; R1-1813075_CONSIDERATION ON PHYSICAL LAYER PROCEDURES_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, XP051555058
- YEDURI SREENIVASA REDDY ET AL: "SIC-RSRA for Massive Machine-to-Machine Communications in 5G Cellular IoT", 2022 IEEE WIRELESS COMMUNICATIONS AND NETWORKING CONFERENCE (WCNC), IEEE, 10 April 2022 (2022-04-10), pages 25 - 30, XP034123484, DOI: 10.1109/WCNC51071.2022.9771752

## Description

### BACKGROUND

### Technical Field

The present disclosure generally relates to communication systems, and more particularly, to the reliability of messaging in wireless communication systems implementing rate-splitting multiple access (RSMA).

### Introduction

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is 5G New Radio (NR). 5G NR is part of a continuous mobile broadband evolution promulgated by Third Generation Partnership Project (3GPP) to meet new requirements associated with latency, reliability, security, scalability (e.g., with Internet of Things (IoT)), and other requirements. 5G NR includes services associated with enhanced mobile broadband (eMBB), massive machine type communications (mMTC), and ultra-reliable low-latency communications (URLLC). Some aspects of 5G NR may be based on the 4G Long Term Evolution (LTE) standard. There exists a need for further improvements in 5G NR technology. These improvements may also be applicable to other multi-access technologies and the telecommunication standards that employ these technologies.

JOUDEH HAMDI ET AL, "Robust Transmission in Downlink Multiuser MISO Systems: A Rate-Splitting Approach", IEEE TRANSACTIONS ON SIGNAL PROCESSING, IEEE, USA, vol. 64, no. 23, doi:10.1109/TSP.2016.2591501, concerns a design in rate-splitting, where each user's message is split into two parts, a common part and a private part. SPREADTRUM COMMUNICATIONS, Consideration on physical layer procedures, 3GPP DRAFT; R1-1813075, concerns blind repetition and HARQ feedback.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In an aspect of the disclosure, a method and an apparatus are provided according to appended independent claims 1 and 10, respectively.

In another aspect of the disclosure, another method and another apparatus are provided according to appended independent claims 6 and 12^{,} respectively.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed. The invention is therefore solely defined by the appended claims.

### BRIEF DESCRIPTION OF THE DRAWINGS

**Figure 1** is a diagram illustrating an example of a wireless communications system and an access network.
**Figure 2** is a diagram illustrating an example disaggregated base station architecture.
**Figure 3A** is a diagram illustrating an example of a first frame, in accordance with various aspects of the present disclosure.
**Figure 3B** is a diagram illustrating an example of downlink channels within a subframe, in accordance with various aspects of the present disclosure.
**Figure 3C** is a diagram illustrating an example of a second frame, in accordance with various aspects of the present disclosure.
**Figure 3D** is a diagram illustrating an example of uplink channels within a subframe, in accordance with various aspects of the present disclosure.
**Figure 4** is a diagram illustrating an example of a base station and user equipment (UE) in an access network.
**Figure 5** is a diagram illustrating an example wireless communications system in which rate-splitting multiple access (RSMA) messages are divided into common parts and part privates for communication.
**Figure 6** is a diagram illustrating an example architecture for recovery of an RSMA message that is divided across a common part and a private part when received.
**Figure 7** is a diagram illustrating an example repetition pattern for an RSMA message that includes a common part and a private part and a legacy message.
**Figure 8** is a call flow diagram illustrating an example of communication of an RSMA message with repetition of at least one of a common part or a private part of the RSMA message.
**Figure 9** is a flowchart illustrating an example of a method of wireless communication at a UE.
**Figure 10** is a flowchart illustrating an example of a method of wireless communication at another apparatus.
**Figure 11** is a diagram illustrating an example of a hardware implementation for an example apparatus.
**Figure 12** is a diagram illustrating another example of a hardware implementation for another example apparatus.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, the concepts and related aspects described in the present disclosure may be implemented in the absence of some or all of such specific details. In some instances, well-known structures, components, and the like are shown in block diagram form in order to avoid obscuring such concepts.

Several aspects of telecommunication systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, computer-executable code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example embodiments, the functions described may be implemented in hardware, software, or any combination thereof. If implemented in software, the functions may be stored on or encoded as one or more instructions or computer-executable code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer-executable code in the form of instructions or data structures that can be accessed by a computer.

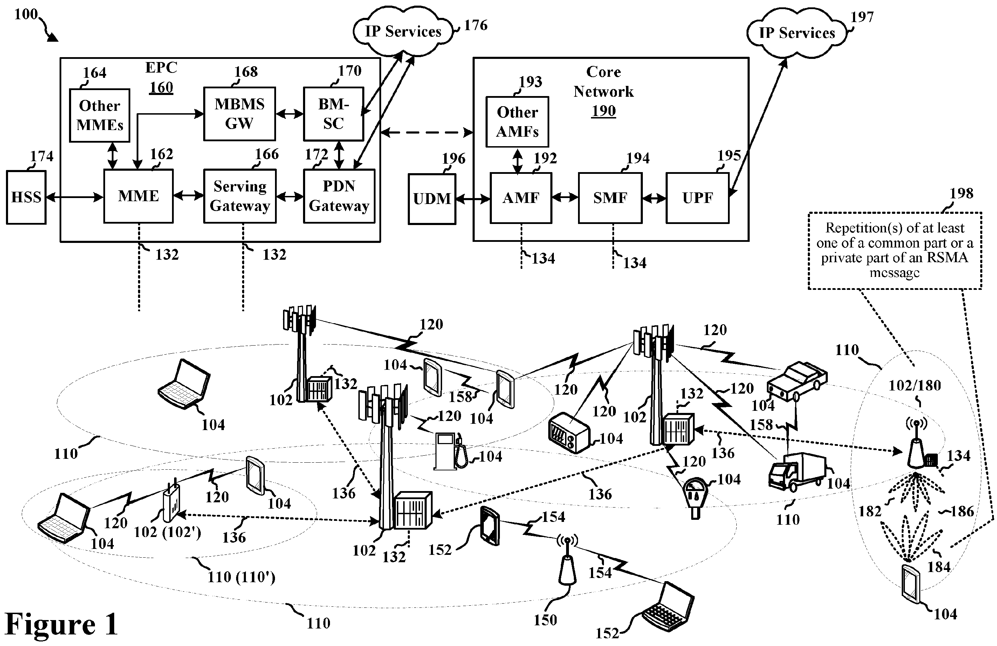

**Figure** 1 is a diagram illustrating an example of a wireless communications system and an access network 100. The wireless communications system (also referred to as a wireless wide area network (WWAN)) includes base stations 102, user equipment(s) (UE) 104, an Evolved Packet Core (EPC) 160, and another core network 190 (e.g., a 5G Core (5GC)). The base stations 102 may include macrocells, such as high power cellular base stations, and/or small cells, such as low power cellular base stations (including femtocells, picocells, and microcells).

The base stations 102 configured for 4G Long Term Evolution (LTE) (collectively referred to as Evolved Universal Mobile Telecommunications System (UMTS) Terrestrial Radio Access Network (E-UTRAN)) may interface with the EPC 160 through first backhaul links 132 (e.g., S1 interface). The base stations 102 configured for 5G New Radio (NR), which may be collectively referred to as the Next Generation Radio Access Network (RAN) (NG-RAN), may interface with a core network 190 through second backhaul links 134. In addition to other functions, the base stations 102 may perform one or more of: transfer of user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, RAN sharing, Multimedia Broadcast Multicast Service (MBMS), subscriber and equipment trace, RAN information management (RIM), paging, positioning, and delivery of warning messages.

In some aspects, the base stations 102 may communicate directly or indirectly (e.g., through the EPC 160 or core network 190) with each other over third backhaul links 136 (e.g., X2 interface). The first backhaul links 132, the second backhaul links 134, and the third backhaul links 136 may be wired, wireless, or some combination thereof. At least some of the base stations 102 may be configured for integrated access and backhaul (IAB). Accordingly, such base stations may wirelessly communicate with other base stations, which also may be configured for IAB.

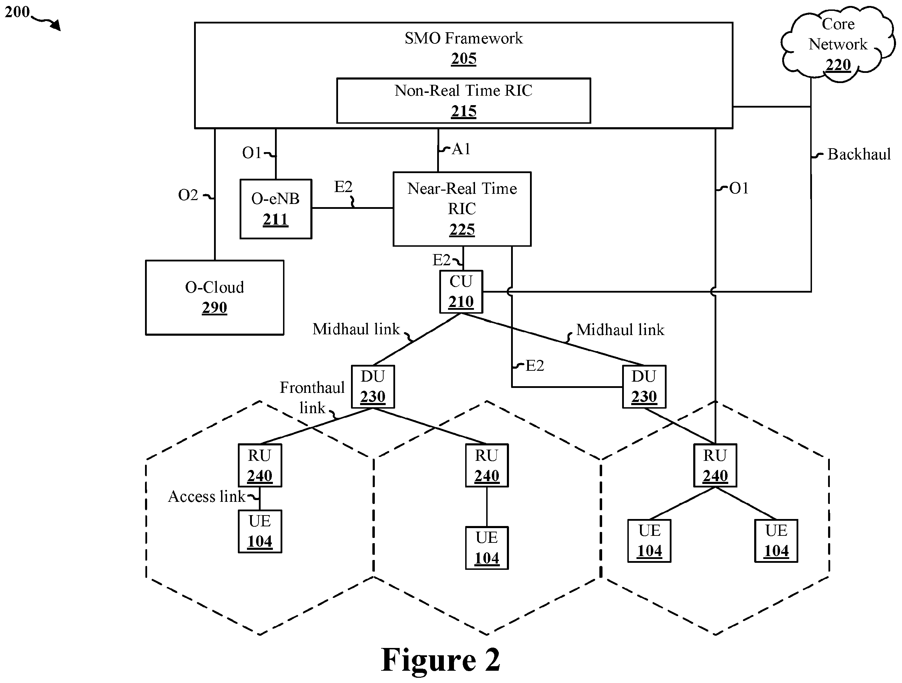

At least some of the base stations 102 configured for IAB may have a split architecture including multiple units, some or all of which may be collocated or distributed and which may communicate with one another. For example, **Figure 2****,** *infra,* illustrates an example disaggregated base station 200 architecture that includes at least one of a central unit (CU) 210, a distributed unit (DU) 230, a radio unit (RU) 240, a remote radio head (RRH), a remote unit, and/or another similar unit configured to implement one or more layers of a radio protocol stack.

The base stations 102 may wirelessly communicate with the UEs 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as IoT devices (e.g., parking meter, gas pump, toaster, vehicles, heart monitor, etc.).

A UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

Each of the base stations 102 may provide communication coverage for a respective geographic coverage area 110, which may also be referred to as a "cell." Potentially, two or more geographic coverage areas 110 may at least partially overlap with one another, or one of the geographic coverage areas 110 may contain another of the geographic coverage areas. For example, the small cell 102' may have a coverage area 110' that overlaps with the coverage area 110 of one or more macro base stations 102. A network that includes both small cells and macrocells may be known as a heterogeneous network. A heterogeneous network may also include Home Evolved Node Bs (eNBs) (HeNBs), which may provide service to a restricted group known as a closed subscriber group (CSG).

The communication links 120 between the base stations 102 and the UEs 104 may include uplink (also referred to as reverse link) transmissions from a UE 104 to a base station 102 and/or downlink (also referred to as forward link) transmissions from a base station 102 to a UE 104. The communication links 120 may use multiple-input and multiple-output (MIMO) antenna technology, including spatial multiplexing, beamforming, and/or transmit diversity. Wireless links or radio links may be on one or more carriers, or component carriers (CCs). The base stations 102 and/or UEs 104 may use spectrum up to Ymegahertz (MHz) (e.g., *Y* may be equal to or approximately equal to 5, 10, 15, 20, 100, 400, etc.) bandwidth per carrier allocated in a carrier aggregation of up to a total of *Yx* MHz (e.g., *x* CCs) used for transmission in each direction. The CCs may or may not be adjacent to each other. Allocation of CCs may be asymmetric with respect to downlink and uplink (e.g., more or fewer CCs may be allocated for downlink than for uplink).

The CCs may include a primary CC and one or more secondary CCs. A primary CC may be referred to as a primary cell (PCell) and each secondary CC may be referred to as a secondary cell (SCell). The PCell may also be referred to as a "serving cell" when the UE is known both to a base station at the access network level and to at least one core network entity (e.g., AMF and/or MME) at the core network level, and the UE may be configured to receive downlink control information in the access network (e.g., the UE may be in an RRC Connected state). In some instances in which carrier aggregation is configured for the UE, each of the PCell and the one or more SCells may be a serving cell.

Certain UEs 104 may communicate with each other using device-to-device (D2D) communication link 158. The D2D communication link 158 may use the downlink/uplink WWAN spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, WiMedia, Bluetooth, ZigBee, Wi-Fi based on the Institute of Electrical and Electronics Engineers (IEEE) 802.11 standard, LTE, or NR.

The wireless communications system may further include a Wi-Fi access point (AP) 150 in communication with Wi-Fi stations (STAs) 152 via communication links 154, e.g., in a 5 gigahertz (GHz) unlicensed frequency spectrum or the like. When communicating in an unlicensed frequency spectrum, the STAs 152 / AP 150 may perform a clear channel assessment (CCA) prior to communicating in order to determine whether the channel is available.

The small cell 102' may operate in a licensed and/or an unlicensed frequency spectrum. When operating in an unlicensed frequency spectrum, the small cell 102' may employ NR and use the same unlicensed frequency spectrum (e.g., 5 GHz or the like) as used by the Wi-Fi AP 150. The small cell 102', employing NR in an unlicensed frequency spectrum, may boost coverage to and/or increase capacity of the access network.

The electromagnetic spectrum is often subdivided, based on frequency/wavelength, into various classes, bands, channels, etc. In 5G NR, two initial operating bands have been identified as frequency range designations FR1 (410 MHz - 7.125 GHz) and FR2 (24.25 GHz - 52.6 GHz). The frequencies between FR1 and FR2 are often referred to as mid-band frequencies. Although a portion of FR1 is greater than 6 GHz, FR1 is often referred to (interchangeably) as a "sub-6 GHz" band in various documents and articles. A similar nomenclature issue sometimes occurs with regard to FR2, which is often referred to (interchangeably) as a "millimeter wave" (or "mmWave" or simply "mmW") band in documents and articles, despite being different from the extremely high frequency (EHF) band (30 GHz - 300 GHz) which is identified by the International Telecommunications Union (ITU) as a "millimeter wave" band. In some aspects, "mmW" or "near-mmW" may additionally or alternatively refer to a 60 GHz frequency range, which may include multiple channels outside of 60 GHz. For example, a 60 GHz frequency band may refer to a set of channels spanning from 57.24 GHz to 70.2 GHz.

In view of the foregoing, unless specifically stated otherwise, the term "sub-6 GHz," "sub-7 GHz," and the like, to the extent used herein, may broadly represent frequencies that may be less than 6 GHz, frequencies that may be less than 7 GHz, frequencies that may be within FR1, and/or frequencies that may include mid-band frequencies. Further, unless specifically stated otherwise, the term "millimeter wave" and other similar references, to the extent used herein, may broadly represent frequencies that may include mid-band frequencies, frequencies that may be within FR2, and/or frequencies that may be within the EHF band.

A base station 102 may be implemented as a macro base station providing a large cell or may be implemented as a small cell 102' having a small cell coverage area. Some base stations 102 may operate in a traditional sub-6 GHz (or sub-7 GHz) spectrum, in mmW frequencies, and/or near-mmW frequencies in communication with the UE 104. When such a base station operates in mmW or near-mmW frequencies, the base station may be referred to as a mmW base station 180. The mmW base station 180 may utilize beamforming 186 with the UE 104 to compensate for the path loss and short range. The base station 180 and the UE 104 may each include a plurality of antennas, such as antenna elements, antenna panels, and/or antenna arrays to facilitate the beamforming.

The base station 180 may transmit a beamformed signal to the UE 104 in one or more transmit directions 182. The UE 104 may receive the beamformed signal from the base station 180 in one or more receive directions 184. The UE 104 may also transmit a beamformed signal to the base station 180 in one or more transmit directions. The base station 180 may receive the beamformed signal from the UE 104 in one or more receive directions. One or both of the base station 180 and/or the UE 104 may perform beam training to determine the best receive and/or transmit directions for the one or both of the base station 180 and/or UE 104. The transmit and receive directions for the base station 180 may or may not be the same. The transmit and receive directions for the UE 104 may or may not be the same.

In various different aspects, one or more of the base stations 102/180 may include and/or be referred to as a gNB, Node B, eNB, an access point, a base transceiver station, a radio base station, a radio transceiver, a transceiver function, a basic service set (BSS), an extended service set (ESS), a transmit reception point (TRP), or some other suitable terminology.

In some aspects, one or more of the base stations 102/180 may be connected to the EPC 160 and may provide respective access points to the EPC 160 for one or more of the UEs 104. The EPC 160 may include a Mobility Management Entity (MME) 162, other MMEs 164, a Serving Gateway 166, an MBMS Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, with the Serving Gateway 166 being connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a Packet Switch (PS) Streaming Service, and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

In some other aspects, one or more of the base stations 102/180 may be connected to the core network 190 and may provide respective access points to the core network 190 for one or more of the UEs 104. The core network 190 may include an Access and Mobility Management Function (AMF) 192, other AMFs 193, a Session Management Function (SMF) 194, and a User Plane Function (UPF) 195. The AMF 192 may be in communication with a Unified Data Management (UDM) 196. The AMF 192 is the control node that processes the signaling between the UEs 104 and the core network 190. Generally, the AMF 192 provides Quality of Service (QoS) flow and session management. All user IP packets are transferred through the UPF 195. The UPF 195 provides UE IP address allocation as well as other functions. The UPF 195 is connected to the IP Services 197. The IP Services 197 may include the Internet, an intranet, an IMS, a PS Streaming Service, and/or other IP services.

In certain aspects, the UE 104 may be configured to receive, from a base station 102/180, information configuring a repetition pattern of at least one of a common part of a rate-splitting multiple access (RSMA) message or a private part of the RSMA message. The UE 104 may be further configured to receive, from the base station 102/180, at least one repetition 198 of the at least one of the common part of the RSMA message or the private part of the RSMA message after receiving the information configuring the repetition pattern.

Correspondingly, a base station 102/180 may be configured to transmit, to at least one UE 104, information configuring a repetition pattern of at least one of a common part of a RSMA message or a private part of the RSMA message. The base station 102/180 may be further configured to transmit, to the at least one UE 104, at least one repetition 198 of the at least one of the common part of the RSMA message or the private part of the RSMA message according to the repetition pattern.

Although the present disclosure may focus on 5G NR, the concepts and various aspects described herein may be applicable to other similar areas, such as sixth generation (6G) technologies, 5G Advanced (5G-A), LTE, LTE-Advanced (LTE-A), Code Division Multiple Access (CDMA), Global System for Mobile communications (GSM), or other wireless/radio access technologies.

**Figure 2** shows a diagram illustrating an example disaggregated base station 200 architecture. Deployment of communication systems, such as 5G NR systems, may be arranged in multiple manners with various components or constituent parts. In a 5G NR system, or network, a network node, a network entity, a mobility element of a network, a RAN) node, a core network node, a network element, or a network equipment, such as a base station, or one or more units (or one or more components) performing base station functionality, may be implemented in an aggregated or disaggregated architecture. For example, a base station (or network node) may be implemented as an aggregated base station (also known as a standalone base station or a monolithic base station) or a disaggregated base station.

An aggregated base station may be configured to utilize a radio protocol stack that is physically or logically integrated within a single RAN node. A disaggregated base station may be configured to utilize a protocol stack that is physically or logically distributed among two or more units (such as one or more CUs, one or more DUs, or one or more RUs). In some aspects, a CU may be implemented within a RAN node, and one or more DUs may be co-located with the CU, or alternatively, may be geographically or virtually distributed throughout one or multiple other RAN nodes. The DUs may be implemented to communicate with one or more RUs. Each of the CU, DU and RU also can be implemented as virtual units, such as a virtual central unit (VCU), a virtual distributed unit (VDU), or a virtual radio unit (VRU).

Base station-type operation or network design may consider aggregation characteristics of base station functionality. For example, disaggregated base stations may be utilized in an IAB network, an open radio access network (O-RAN (such as the network configuration sponsored by the O-RAN Alliance)), or a virtualized radio access network (vRAN, also known as a cloud radio access network (C-RAN)). Disaggregation may include distributing functionality across two or more units at various physical locations, as well as distributing functionality for at least one unit virtually, which can enable flexibility in network design. The various units of the disaggregated base station, or disaggregated RAN architecture, can be configured for wired or wireless communication with at least one other unit.

The disaggregated base station 200 architecture may include one or more CUs 210 that can communicate directly with a core network 220 via a backhaul link, or indirectly with the core network 220 through one or more disaggregated base station units (such as a Near-Real Time (Near-RT) RAN Intelligent Controller (RIC) 225 via an E2 link, or a Non-Real Time (Non-RT) RIC 215 associated with a Service Management and Orchestration (SMO) Framework 205, or both). A CU 210 may communicate with one or more DUs 230 via respective midhaul links, such as an F1 interface. The DUs 230 may communicate with one or more RUs 240 via respective fronthaul links. The RUs 240 may communicate with respective UEs 104 via one or more radio frequency (RF) access links. In some implementations, the UE 104 may be simultaneously served by multiple RUs 240.

Each of the units, i.e., the CUs 210, the DUs 230, the RUs 240, as well as the Near-RT RICs 225, the Non-RT RICs 215 and the SMO Framework 205, may include one or more interfaces or be coupled to one or more interfaces configured to receive or transmit signals, data, or information (collectively, signals) via a wired or wireless transmission medium. Each of the units, or an associated processor or controller providing instructions to the communication interfaces of the units, can be configured to communicate with one or more of the other units via the transmission medium. For example, the units can include a wired interface configured to receive or transmit signals over a wired transmission medium to one or more of the other units. Additionally, the units can include a wireless interface, which may include a receiver, a transmitter or transceiver (such as an RF transceiver), configured to receive or transmit signals, or both, over a wireless transmission medium to one or more of the other units.

In some aspects, the CU 210 may host one or more higher layer control functions. Such control functions can include radio resource control (RRC), packet data convergence protocol (PDCP), service data adaptation protocol (SDAP), or the like. Each control function can be implemented with an interface configured to communicate signals with other control functions hosted by the CU 210. The CU 210 may be configured to handle user plane functionality (i.e., Central Unit - User Plane (CU-UP)), control plane functionality (i.e., Central Unit - Control Plane (CU-CP)), or a combination thereof. In some implementations, the CU 210 can be logically split into one or more CU-UP units and one or more CU-CP units. The CU-UP unit can communicate bidirectionally with the CU-CP unit via an interface, such as the E1 interface when implemented in an O-RAN configuration. The CU 210 can be implemented to communicate with the DU 230, as necessary, for network control and signaling.

The DU 230 may correspond to a logical unit that includes one or more base station functions to control the operation of one or more RUs 240. In some aspects, the DU 230 may host one or more of a radio link control (RLC) layer, a medium access control (MAC) layer, and one or more high physical (PHY) layers (such as modules for forward error correction (FEC) encoding and decoding, scrambling, modulation and demodulation, or the like) depending, at least in part, on a functional split, such as those defined by the 3^{rd} Generation Partnership Project (3GPP). In some aspects, the DU 230 may further host one or more low PHY layers. Each layer (or module) can be implemented with an interface configured to communicate signals with other layers (and modules) hosted by the DU 230, or with the control functions hosted by the CU 210.

Lower-layer functionality can be implemented by one or more RUs 240. In some deploy-ments, an RU 240, controlled by a DU 230, may correspond to a logical node that hosts RF processing functions, or low-PHY layer functions (such as performing fast Fourier transform (FFT), inverse FFT (iFFT), digital beamforming, physical random access channel (PRACH) extraction and filtering, or the like), or both, based at least in part on the functional split, such as a lower layer functional split. In such an architecture, the RU(s) 240 can be implemented to handle over the air (OTA) communication with one or more UEs 104. In some implementations, real-time and non-real-time aspects of control and user plane communication with the RU(s) 240 can be controlled by the corresponding DU 230. In some scenarios, this configuration can enable the DU(s) 230 and the CU 210 to be implemented in a cloud-based RAN architecture, such as a vRAN architecture.

The SMO Framework 205 may be configured to support RAN deployment and provisioning of non-virtualized and virtualized network elements. For non-virtualized network elements, the SMO Framework 205 may be configured to support the deployment of dedicated physical resources for RAN coverage requirements which may be managed via an operations and maintenance interface (such as an O1 interface). For virtualized network elements, the SMO Framework 205 may be configured to interact with a cloud computing platform (such as an open cloud (O-Cloud) 290) to perform network element life cycle management (such as to instantiate virtualized network elements) via a cloud computing platform interface (such as an O2 interface). Such virtualized network elements can include, but are not limited to, CUs 210, DUs 230, RUs 240 and Near-RT RICs 225. In some implementations, the SMO Framework 205 can communicate with a hardware aspect of a 4G RAN, such as an open eNB (O-eNB) 211, via an O1 interface. Additionally, in some implementations, the SMO Framework 205 can communicate directly with one or more RUs 240 via an O1 interface. The SMO Framework 205 also may include a Non-RT RIC 215 configured to support functionality of the SMO Framework 205.

The Non-RT RIC 215 may be configured to include a logical function that enables non-real-time control and optimization of RAN elements and resources, Artificial Intelligence/Machine Learning (AI/ML) workflows including model training and updates, or policy-based guidance of applications/features in the Near-RT RIC 225. The Non-RT RIC 215 may be coupled to or communicate with (such as via an A1 interface) the Near-RT RIC 225. The Near-RT RIC 225 may be configured to include a logical function that enables near-real-time control and optimization of RAN elements and resources via data collection and actions over an interface (such as via an E2 interface) connecting one or more CUs 210, one or more DUs 230, or both, as well as an O-eNB, with the Near-RT RIC 225.

In some implementations, to generate AI/ML models to be deployed in the Near-RT RIC 225, the Non-RT RIC 215 may receive parameters or external enrichment information from external servers. Such information may be utilized by the Near-RT RIC 225 and may be received at the SMO Framework 205 or the Non-RT RIC 215 from non-network data sources or from network functions. In some examples, the Non-RT RIC 215 or the Near-RT RIC 225 may be configured to tune RAN behavior or performance. For example, the Non-RT RIC 215 may monitor long-term trends and patterns for performance and employ AI/ML models to perform corrective actions through the SMO Framework 205 (such as reconfiguration via O1) or via creation of RAN management policies (such as A1 policies).

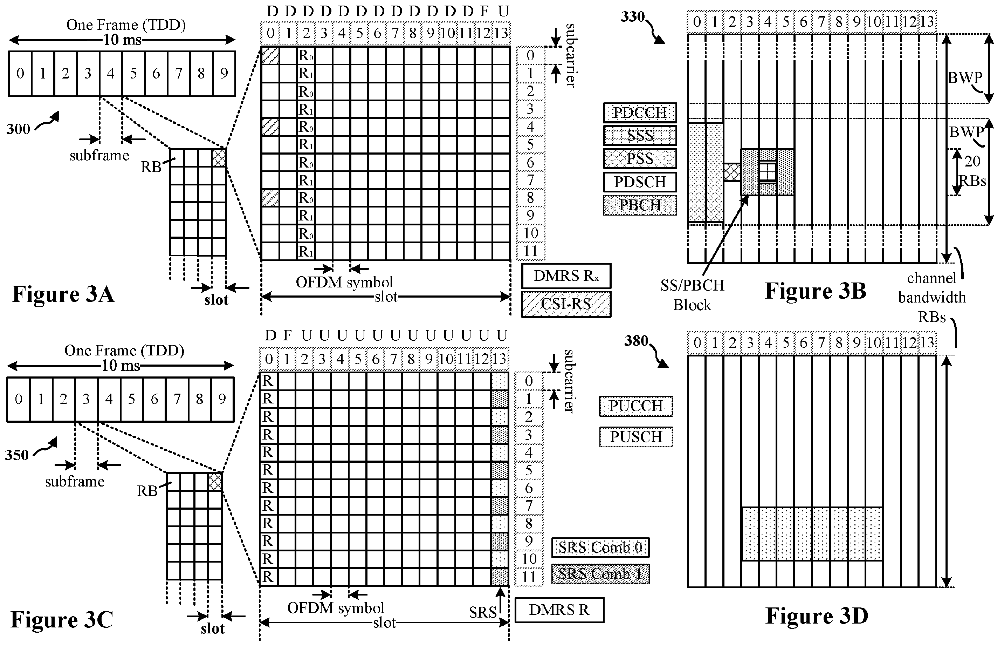

**Figure 3A** is a diagram illustrating an example of a first subframe 300 within a 5G NR frame structure. **Figure 3B** is a diagram illustrating an example of downlink channels within a 5G NR subframe 330. **Figure 3C** is a diagram illustrating an example of a second subframe 350 within a 5G NR frame structure. **Figure 3D** is a diagram illustrating an example of uplink channels within a 5G NR subframe 380. The 5G NR frame structure may be frequency division duplexed (FDD) in which for a particular set of subcarriers (carrier system bandwidth), subframes within the set of subcarriers are dedicated for either downlink or uplink, or may be time division duplexed (TDD) in which for a particular set of subcarriers (carrier system bandwidth), subframes within the set of subcarriers are dedicated for both downlink and uplink. In the examples provided by **Figures 3A** and **3C****,** the 5G NR frame structure is assumed to be TDD, with subframe 4 being configured with slot format 28 (with mostly downlink), where D is downlink, U is uplink, and F is flexible for use between downlink/uplink, and subframe 3 being configured with slot format 34 (with mostly uplink). While subframes 3, 4 are shown with slot formats 34, 28, respectively, any particular subframe may be configured with any of the various available slot formats 0-61. Slot formats 0, 1 are all downlink, uplink, respectively. Other slot formats 2-61 include a mix of downlink, uplink, and flexible symbols. UEs are configured with the slot format (dynamically through downlink control information (DCI), or semi-statically/statically through RRC signaling) through a received slot format indicator (SFI). Note that the description *infra* applies also to a 5G NR frame structure that is TDD.

Other wireless communication technologies may have a different frame structure and/or different channels. A frame, e.g., of 10 milliseconds (ms), may be divided into 10 equally sized subframes (1 ms). Each subframe may include one or more time slots. Subframes may also include mini-slots, which may include 7, 4, or 2 symbols. Each slot may include 7 or 14 symbols, depending on the slot configuration. For slot configuration 0, each slot may include 14 symbols, and for slot configuration 1, each slot may include 7 symbols. The symbols on downlink may be cyclic prefix (CP) orthogonal frequency-division multiplexing (OFDM) (CP-OFDM) symbols. The symbols on uplink may be CP-OFDM symbols (for high throughput scenarios) or discrete Fourier transform (DFT) spread OFDM (DFT-s-OFDM) symbols (also referred to as single carrier frequency-division multiple access (SC-FDMA) symbols) (for power limited scenarios; limited to a single stream transmission). The number of slots within a subframe is based on the slot configuration and the numerology. For slot configuration , different numerologies µ 0 to 4 allow for 1, 2, 4, 8, and 16 slots, respectively, per subframe. For slot configuration 1, different numerologies 0 to 2 allow for 2, 4, and 8 slots, respectively, per subframe. Accordingly, for slot configuration 0 and numerology µ, there are 14 symbols/slot and 2^{µ} slots/subframe. The subcarrier spacing and symbol length/duration are a function of the numerology. The subcarrier spacing may be equal to 2*^{µ}* * 15 kilohertz (kHz), where *µ* is the numerology 0 to 4. As such, the numerology µ=0 has a subcarrier spacing of 15 kHz and the numerology µ=4 has a subcarrier spacing of 240 kHz. The symbol length/duration is inversely related to the subcarrier spacing. **Figures 3A-3D** provide an example of slot configuration with 14 symbols per slot and numerology µ=2 with 4 slots per subframe. The slot duration is 0.25 ms, the subcarrier spacing is 60 kHz, and the symbol duration is approximately 16.67 microseconds (µs). Within a set of frames, there may be one or more different bandwidth parts (BWPs) (see **Figure 3B****)** that are frequency division multiplexed. Each BWP may have a particular numerology.

A resource grid may be used to represent the frame structure. Each time slot includes a resource block (RB) (also referred to as physical RBs (PRBs)) that extends 12 consecutive subcarriers. The resource grid is divided into multiple resource elements (REs). The number of bits carried by each RE depends on the modulation scheme.

As illustrated in **Figure 3A****,** some of the REs carry at least one pilot signal, such as a reference signal (RS), for the UE. Broadly, RSs may be used for beam training and management, tracking and positioning, channel estimation, and/or other such purposes. In some configurations, an RS may include at least one demodulation RS (DM-RS) (indicated as Rₓ for one particular configuration, where 100x is the port number, but other DM-RS configurations are possible) and/or at least one channel state information (CSI) RS (CSI-RS) for channel estimation at the UE. In some other configurations, an RS may additionally or alternatively include at least one beam measurement (or management) RS (BRS), at least one beam refinement RS (BRRS), and/or at least one phase tracking RS (PT-RS).

**Figure 3B** illustrates an example of various downlink channels within a subframe of a frame. The physical downlink control channel (PDCCH) carries DCI within one or more control channel elements (CCEs), each CCE including nine RE groups (REGs), each REG including four consecutive REs in an OFDM symbol. A PDCCH within one BWP may be referred to as a control resource set (CORESET). Additional BWPs may be located at greater and/or lower frequencies across the channel bandwidth. A primary synchronization signal (PSS) may be within symbol 2 of particular subframes of a frame. A UE (such as a UE 104 of **Figure 1****)** may use the PSS to determine subframe/symbol timing and a physical layer identity. A secondary synchronization signal (SSS) may be within symbol 4 of particular subframes of a frame. A UE (such as a UE 104 of **Figure 1****)** may use the SSS to determine a physical layer cell identity group number and radio frame timing. Based on the physical layer identity and the physical layer cell identity group number, the UE can determine a physical cell identifier (PCI). Based on the PCI, the UE can determine the locations of the aforementioned DM-RS. The physical broadcast channel (PBCH), which carries a master information block (MIB), may be logically grouped with the PSS and SSS to form a synchronization signal (SS)/PBCH block (also referred to as SS block (SSB)). The MIB provides a number of RBs in the system bandwidth and a system frame number (SFN). The physical downlink shared channel (PDSCH) carries user data, broadcast system information not transmitted through the PBCH such as system information blocks (SIBs), and paging messages.

As illustrated in **Figure 3C****,** some of the REs carry DM-RS (indicated as R for one particular configuration, but other DM-RS configurations are possible) for channel estimation at the base station. The UE may transmit DM-RS for the physical uplink control channel (PUCCH) and DM-RS for the physical uplink shared channel (PUSCH). The PUSCH DM-RS may be transmitted in the first one or two symbols of the PUSCH. The PUCCH DM-RS may be transmitted in different configurations depending on whether short or long PUCCHs are transmitted and depending on the particular PUCCH format used. The UE may transmit sounding reference signals (SRS). The SRS may be transmitted in the last symbol of a subframe. The SRS may have a comb structure, and a UE may transmit SRS on one of the combs. The SRS may be used by a base station for channel quality estimation to enable frequency-dependent scheduling on the uplink.

**Figure 3D** illustrates an example of various uplink channels within a subframe of a frame. The PUCCH may be located as indicated in one configuration. The PUCCH carries uplink control information (UCI), which may include a scheduling request (SR), a channel quality indicator (CQI), a precoding matrix indicator (PMI), a rank indicator (RI), and hybrid automatic repeat request (HARQ) acknowledgement (ACK) / non-acknowledgement (NACK) feedback. The PUSCH carries data, and may additionally be used to carry a buffer status report (BSR), a power headroom report (PHR), and/or UCI.

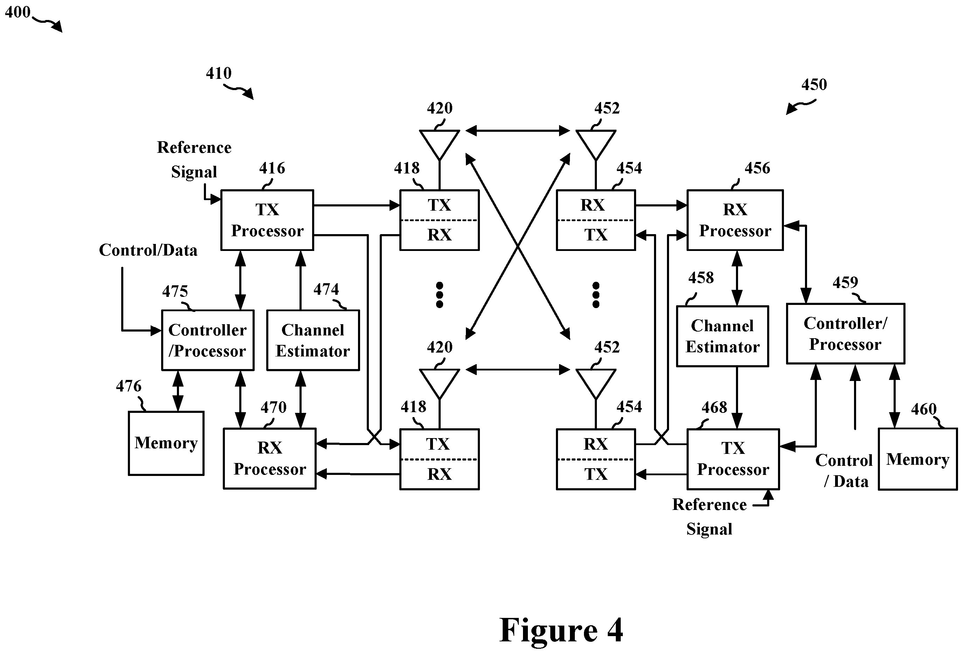

**Figure 4** is a block diagram of a base station 410 in communication with a UE 450 in an access network 400. In the downlink, IP packets from the EPC 160 may be provided to a controller/processor 475. The controller/processor 475 implements Layer 2 (L2) and Layer 3 (L3) functionality. L3 includes an RRC layer, and L2 includes a service data adaptation protocol (SDAP) layer, a packet data convergence protocol (PDCP) layer, an RLC layer, and a medium access control (MAC) layer. The controller/processor 475 provides RRC layer functionality associated with broadcasting of system information (e.g., MIB, SIBs), RRC connection control (e.g., RRC connection paging, RRC connection establishment, RRC connection modification, and RRC connection release), inter radio access technology (RAT) mobility, and measurement configuration for UE measurement reporting; PDCP layer functionality associated with header compression / decompression, security (ciphering, deciphering, integrity protection, integrity verification), and handover support functions; RLC layer functionality associated with the transfer of upper layer packet data units (PDUs), error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through HARQ, priority handling, and logical channel prioritization.

The transmit (TX) processor 416 and the receive (RX) processor 470 implement Layer 1 (L1) functionality associated with various signal processing functions. L1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 416 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 474 may be used to determine the coding and modulation scheme, as well as for spatial processing. The channel estimate may be derived from a reference signal and/or channel condition feedback transmitted by the UE 450. Each spatial stream may then be provided to a different antenna 420 via a separate transmitter 418TX. Each transmitter 418TX may modulate a radio frequency (RF) carrier with a respective spatial stream for transmission.

At the UE 450, each receiver 454RX receives a signal through at least one respective antenna 452. Each receiver 454RX recovers information modulated onto an RF carrier and provides the information to the receive (RX) processor 456. The TX processor 468 and the RX processor 456 implement L1 functionality associated with various signal processing functions. The RX processor 456 may perform spatial processing on the information to recover any spatial streams destined for the UE 450. If multiple spatial streams are destined for the UE 450, they may be combined by the RX processor 456 into a single OFDM symbol stream. The RX processor 456 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 410. These soft decisions may be based on channel estimates computed by the channel estimator 458. The soft decisions are then decoded and deinterleaved to recover the data and control signals that were originally transmitted by the base station 410 on the physical channel. The data and control signals are then provided to the controller/processor 459, which implements L3 and L2 functionality.

The controller/processor 459 can be associated with a memory 460 that stores program codes and data. The memory 460 may be referred to as a computer-readable medium. In the uplink, the controller/processor 459 provides demultiplexing between transport and logical channels, packet reassembly, deciphering, header decompression, and control signal processing to recover IP packets from the EPC 160. The controller/processor 459 is also responsible for error detection using an ACK and/or NACK protocol to support HARQ operations.

Similar to the functionality described in connection with the downlink transmission by the base station 410, the controller/processor 459 provides RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 458 from a reference signal or feedback transmitted by the base station 410 may be used by the TX processor 468 to select the appropriate coding and modulation schemes, and to facilitate spatial processing. The spatial streams generated by the TX processor 468 may be provided to different antenna 452 via separate transmitters 454TX. Each transmitter 454TX may modulate an RF carrier with a respective spatial stream for transmission.

The uplink transmission is processed at the base station 410 in a manner similar to that described in connection with the receiver function at the UE 450. Each receiver 418RX receives a signal through at least one respective antenna 420. Each receiver 418RX recovers information modulated onto an RF carrier and provides the information to a RX processor 470.

The controller/processor 475 can be associated with a memory 476 that stores program codes and data. The memory 476 may be referred to as a computer-readable medium. In the uplink, the controller/processor 475 provides demultiplexing between transport and logical channels, packet reassembly, deciphering, header decompression, control signal processing to recover IP packets from the UE 450. IP packets from the controller/processor 475 may be provided to the EPC 160. The controller/processor 475 is also responsible for error detection using an ACK and/or NACK protocol to support HARQ operations.

In some aspects, at least one of the TX processor 468, the RX processor 456, and the controller/processor 459 may be configured to perform aspects in connection with the at least one repetition 198 of the at least one of the common part of the RSMA message or the private part of the RSMA message of **Figure 1****.**

In some other aspects, at least one of the TX processor 416, the RX processor 470, and the controller/processor 475 may be configured to perform aspects in connection with the at least one repetition 198 of the at least one of the common part of the RSMA message or the private part of the RSMA message of **Figure 1****.**

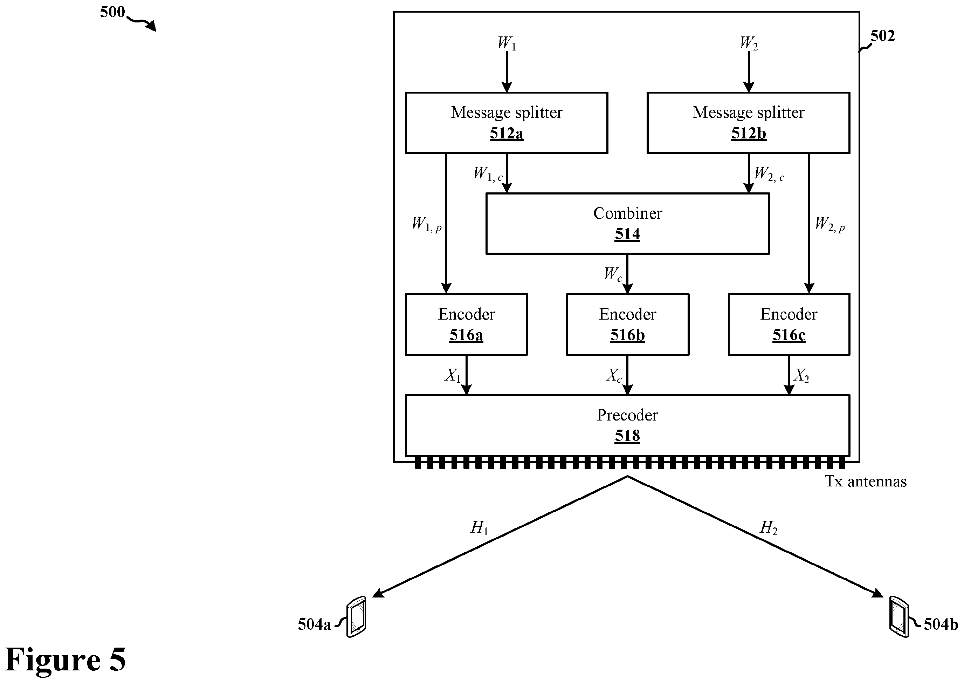

Referring to **Figure 5** through **Figure 12****,** various concepts and aspects related to RSMA messaging in radio access and other wireless networks are illustrated and described. RSMA is a non-orthogonal multiple access scheme in which UEs may be scheduled on the same set of time and frequency resources. That is, a transmitter (e.g., a base station or other network node) may superimpose different messages to different UEs on the same set of resources. In so doing, greater degrees of freedom and increased channel capacities may be achieved, e.g., for broadcast channels, multicast channels, and other channels.

Broadly, RSMA includes splitting each of the messages intended for individual UEs into two parts: a common part and a private part. The common parts of individual messages of at least two UEs are concatenated into a common message, which is transmitted to the at least two UEs in a common stream. However, the private parts of individual message are separately encoded and modulated to private streams for transmission to the corresponding UEs.

At the receiver, the UE may first decode the common message to obtain a portion of the individual message intended for the UE. The UE may use the common message to perform successive interference cancelation (or another joint decoding technique) so that the UE is able to decode the private part of the individual message. In effect, the UE partially decodes some interference, while treating the remaining interference as noise.

Successfully decoding the common and individual parts of an individual message is contingent upon clean channel estimation. In particular, clean channel estimation may significantly factor into successive interference cancelation, upon which recovery of the private part of an individual message is predicated. Failure to obtain such channel estimation (e.g., due to imperfect or erroneous channel state information at the transmitter) may frustrate recovery of an individual message, for example, because the successive interference cancellation used to recover the private part of the individual message is contingent upon clean channel estimation.

In view of the foregoing, a need exists for enhancements of the reliability of RSMA messaging, such as when channel estimation fails. The present disclosure provides various techniques and approaches to communicating repetitions of at least a portion of a common part and/or a private part of an individual message. Such repetitions may improve the reliability and/or reduce the latency experienced with RSMA messaging. For example, repetition of the common part of an individual message may enable successive interference cancellation for recovery of the common part of the individual message where a UE fails to successfully decode an initial transmission of the common part of the individual message. In another example, repetition of the private part of an individual message may allow the private part to be successfully recovered when an initial transmission of the private part is not successfully decoded. Various other concepts and aspects related to RSMA messaging are described herein.

**Figure 5** is a diagram illustrating an example wireless communications system 500 in which RSMA messages are divided into common parts and part privates for communication. In some aspects, the transmitter 502 may be implemented as a base station or other network node. In some other aspects, however, the transmitter 502 may be implemented as a UE, such as a UE configured for D2D communication. In some aspects, each of the receivers 504a, 504b may be implemented as a UE.

As illustrated, a transmitter 502 may have multiple message *W*₁ and *W*₂ to transmit to multiple receivers 504a, 504b. The transmitter 502 may schedule the individual messages *W*₁ and *W*₂ for the receivers 504a, 504b on the same set of resources. The transmitter 502 may include a first message splitter 512a that splits the first individual message *W*₁ into a common part W_{1,*c*} and a private part *W*_{1,}*ₚ,* and a second message splitter 512b that splits the second individual message *W*₂ into a common part *W*_{2,*c*} and a private part *W*_{2,}*ₚ.* At a combiner 514 of the transmitter 502, the common parts *W*_{1,*c*} and *W*_{2,*c*} of the respective individual messages *W*₁ and *W*₂ may be concatenated into a common message *W*_{c}.

The transmitter 502 may further include a first encoder 516a that is configured to separately encode the private part *W*_{1*,p*} of the first individual message *W*₁, a second encoder 516b that is configured to separately encode the common message *W_{c}*, and a third encoder 516c that is configured to separately encode the private part *W*_{2*,p*} of the second individual message *W*₂. The first and third encoders 516a, 516c encode the private parts *W*₁*_{,p}, W*_{2*,p*} of the first and second individual messages *W*₁*, W*₂, respectively, and modulate those private parts *W*_{1,}*ₚ, W*_{2*,p*} onto a first private stream *X*₁ or a second private stream *X*₂, as well as map the first and second private streams *X*₁, *X*₂ to one or more layers. Similarly, the second encoder 516b separately encodes the common message *W_{c}* and modulates the encoded common message *W_{c}* into a common stream Xc, and maps the common stream Xc to one or more layers.

The common stream Xc and the two private streams *X*₁ and *X*₂ are supplied to a precoder 518. The precoder 518 precodes the common stream *X_{c}* by *P_{c}*. Similarly, the precoder 518 precodes the private streams *X*₁ and *X*₂ by *P*₁ and *P*₂, respectively. The transmitter 502 may transmit the message stream *X* to the receivers 504a, 504b, with the message stream *X* including the precoded common stream *P_{c}X_{c}* and the precoded first and second private streams *P*₁*X*₁ and *P*₂*X*₂ (that is, *X= P_{c}X_{c}* + *P*₁*X*₁ + *P*₂*X*₂).

The message stream X may reach the first receiver 504a over a first channel *H*₁. Therefore, the first receiver 504a may observe the message stream as *Y*₁ *= H*₁*P_{c}X_{c}* + *H*₁*P*₁*X*₁ + *H*₁*P*₂*X*₂ + *N*₁, where *N*₁ is noise at the first receiver 504a. Similarly, the message stream *X* may reach the second receiver 504b over a second channel *H*₂. Therefore, the second receiver 504b may observe the message stream as *Y*₂ *= H*₂*P_{c}X_{c}* + *H*₂*P*₁*X*₁ + *H₁P*₂*X*₂ + *N*₂, where *N*₂ is noise at the second receiver 504b.

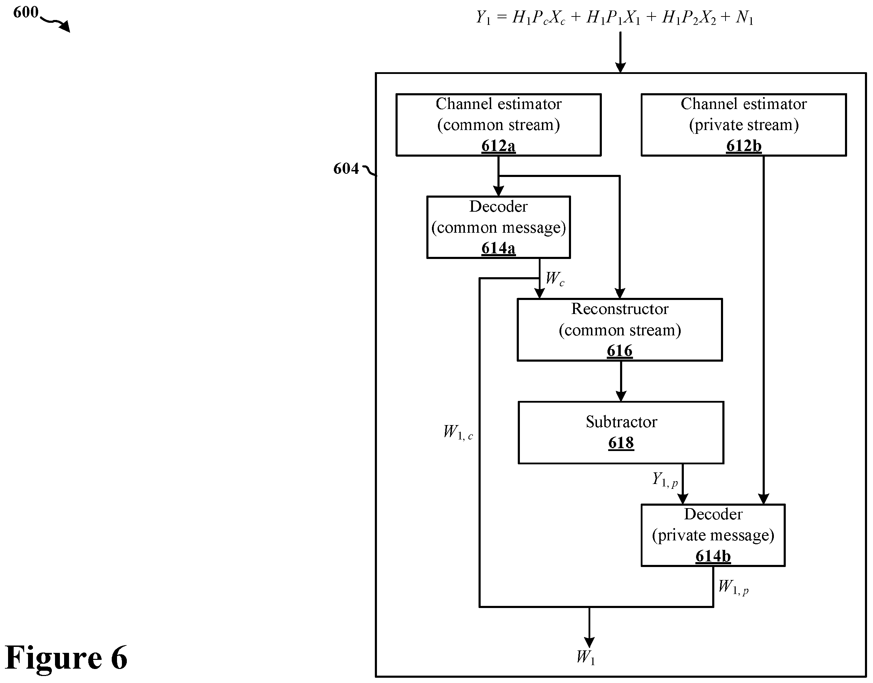

**Figure 6** is a diagram illustrating an example architecture 600 for recovery of an RSMA message *W*₁ that is divided across a common part *W_{1,c}* and a private part *W*_{1*,p*} when received. The receiver 604, which may be implemented as a UE, may receive an RSMA message *Y*₁ over a wireless channel *H*₁ that includes a precoded common stream *P_{c}X_{c},* a precoded private stream *P*₁*X*₁ intended for the receiver 604, and at least one other precoded private stream *P*₂*X*₂ intended for another receiver. The receiver 604 may further receive the RSMA message *Y*₁ with some noise *N*₁.

The receiver 604 may include a first channel estimator 612 that is configured to estimate the effective channel *H*₁*P_{c}* corresponding to the common stream *X_{c}*. Further, the receiver 604 may include a first decoder 614a that is configured to decode the common stream *X_{c}* in order to recover the common message *W_{c}*.

The receiver 604 may use the decoded common message *W_{c}* for at least two purposes. First, the receiver 604 may identify the common part *W*_{1,*c*} of the individual message *W*₁ intended for the receiver 604 in the decoded common message *W_{c}*. The common part *W*_{1,*c*} of the individual message *W*₁ may include some data intended for the receiver 604. However, in order to recover the full individual message *W*₁, the receiver 604 combines the common part *W*_{1,*c*} with the private part *W*_{1,}*ₚ.* The second use of the common message *W_{c}* is decoding the private part *W*_{1*,p*} of the individual message *W*₁ through successive interference cancellation that uses an effective channel estimation corresponding to the common stream *H*₁*P_{c}.*

The receiver 604 may include a reconstructor 616 that is configured to reconstruct the common stream *X_{c}*. The reconstructor 616 may be configured to reencode the common message *W_{c}* into the common stream *X_{c}*. The reconstructor 616 may be further configured to multiply the reconstructed common stream *X_{c}* with the estimated effective channel *H*₁*P_{c}* corresponding to the common stream *X_{c}*.

The receiver 604 may further include a subtractor 618 that is configured to subtract the product of the estimated effective channel *H*₁*P_{c}* and the common stream *X_{c}* from the received signal *Y*₁. The subtractor may output the difference between the received signal *Y*₁ and the product of the estimated effective channel *H*₁*P_{c}* and the common stream *X_{c}* - that is, *Y*₁ *- H*₁*P_{c}X_{c}.* The difference output by the subtractor 618 may corresponding to the received private stream *Y*_{1*,p*} that is included in the received signal *Y*₁ - i.e., *Y*₁*_{,p} = Y*₁ *- H*₁*P_{c}X_{c} = H*₁*P*₁*X*₁ + *H*₂*P*₂*X*₂ + *N*₁ - provided that the channel estimation is sufficiently accurate and decoding of the common message *W_{c}* is successful.

Additionally, the receiver 604 may include a second decoder 614b that is configured to decode the received private stream *Y*₁*_{,p}.* The second decoder 614b may output the decoding result of *Y*₁*_{,p},* which may correspond to the private part *W*_{1*,p*} of the individual message *W*₁ (e.g., given satisfactory channel estimation and decoding of the common message *W_{c}*).

The receiver 604 may combine the common part *W*_{1,*c*} with the private part *W*_{1,*p*} in order to recover the individual message *W*₁. As is evident from the foregoing, an accurate estimation of the effective channel *H*₁*P_{c}* of a common stream *X_{c}* may increase the probability of successfully decoding a common message *W_{c}* and enable a sufficiently accurate reconstruction of the common message *W_{c}* that is used for successive interference cancellation. Thus, accurate estimation of the effective channel *H*₁*P_{c}* of a common stream *X_{c}* is a necessary (although alone, not sufficient) condition for successful recovery of a private part *W*_{1,*p*} and ultimately, successful recovery of an individual message *W*₁.

The potential exists for estimation of an effective channel to fail or to be sufficiently inaccurate as to be prohibitive of successive interference cancellation upon which recovery of the private part of an individual RSMA message is predicated. According to various aspects of the present disclosure, potential failure of recovery of a private part of an individual message may be mitigated through repetition of at least one part of an individual message.

In some of the aspects described herein, a transmitter may be configured to transmit at least two instances of the common part of an RSMA message (e.g., one instance may be an initial transmission of the common part of the RSMA message, and another instance may be one repeated transmission of the initial transmission of the common part of the RSMA message). Repetition of the common part of an RSMA message may provide some additional opportunities for a receiver to accurately estimate the effective channel and/or reconstruct a common stream that may be subtracted from a received signal that carries the common stream and at least two private streams.

In some other aspects described herein, a transmitter may be configured to transmit at least two instances of the private part of an individual message (e.g., one instance may be an initial transmission of the private part of the RSMA message, and another instance may be one repeated transmission of the initial transmission of the private part of the RSMA message). Thus, if a receiver fails to recover the private part of an individual message, other opportunities to do so may exist.

In still further aspects, a repetition pattern may include repetition(s) of both the common part and a private part of an RSMA message. For example, each of the common part and the private part of an RSMA message may be transmitted at least two times.

As with the common and/or private parts of an RSMA message, some data transmitted to a UE in a legacy message (e.g., messages transmitted using orthogonal multiple access schemes) may also be repeatedly transmitted. The repetition pattern to be applied to legacy messages may be configured in the same manner and/or using the same signalling as RSMA messaging.

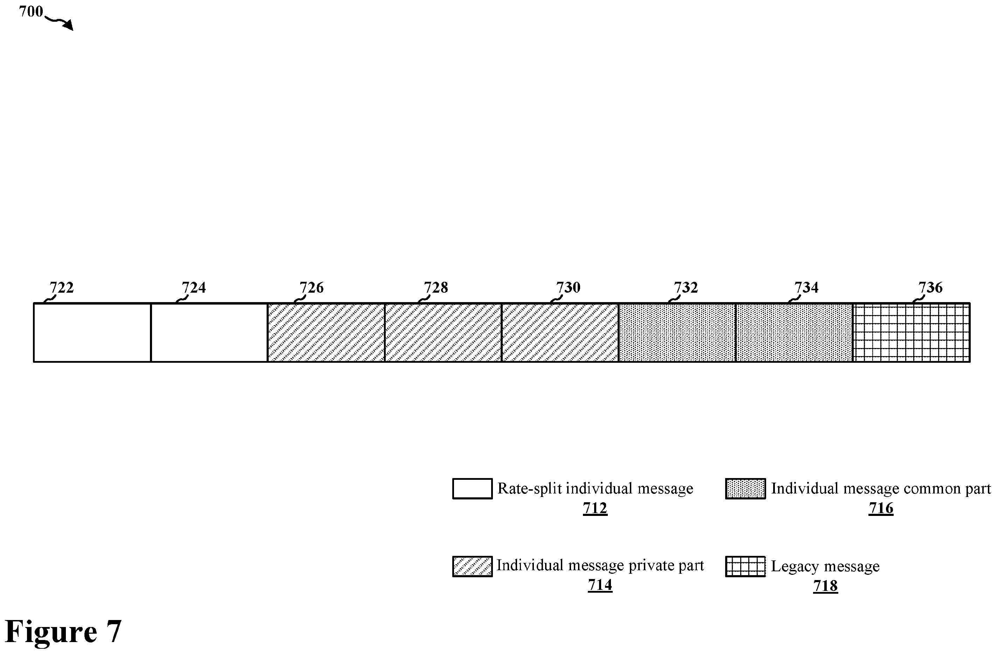

**Figure 7** is a diagram illustrating an example repetition pattern 700 for an RSMA message 712, including a private part 714 and a common part 716, and a legacy message 718. The legacy message 718 may be a message to which rate splitting is not applied. For example, the legacy message 718 may be any message that is not communicated via rate splitting, such as some messages between base stations (e.g., gNBs) and UEs and some messages between UEs on sidelink channels.

According to various aspects of the present disclosure, "slot aggregation" may refer to a configuration in which multiple slots are aggregated together for communication between a UE and a network node. For example, a network node may configure a downlink transmission on a PDSCH in multiple slots, with one DCI being used to schedule the multiple slots. At least a portion of the downlink transmission may be repeated in those multiple PDSCH slots. For example, the same TB may be repeated within each symbol allocation among each of the aggregated slots, with the PDSCH being limited to a single transmission layer.

A UE may be configured with an aggregation factor, e.g., via RRC signalling received from a network node. The aggregation factor may indicate the number of consecutive slots (e.g., two, four, or eight) aggregated together. For example, slot aggregation on a PDSCH may be at least partially configured through an RRC parameter *pdsch-AggregationFactor* in a *pdsch-con*fig information element (IE).

The symbol in which a downlink transmission begins in each of multiple aggregated slots and the number of consecutive symbols spanned by the downlink transmission in each of the multiple aggregated slots may be conveyed via a start and length indicator value (SLIV), which may be applied in different functions to derive both a starting symbol index and a number of consecutive symbols. The same SLIV may be applied across all of the aggregated slots.

In some aspects, an error-correcting code may be applied to one or both of a common stream and/or a private stream carrying common parts and private parts, respectively, of individual messages. An error-correcting code may implement incremental redundancy across the aggregated slots, with a circular buffer indicating how many bits a decoder has to decode for a codeword. The circular buffer may include different redundancy versions (RVs) to indicate where the bits for the codeword start within an encoded message, and four different RVs may be defined in relation to the circular buffer. For example, RV0 may indicate that the codeword starts at bit zero (0) of the encoded message, RV1 may indicate that the codeword starts approximately one quarter of the way through the encoded message, RV2 may indicate that the codeword starts approximately one half of the way through the encoded message, and RV3 may indicate that the codeword starts approximately five-sixths of the way through the encoded message. An initial transmission may be transmitted according to RV0, and bits of the encoded message may wrap around to bit zero (0) of the encoded message (e.g., circle around based on the circular buffer) when the end of the encoded message is reached for RV1, RV2, and RV3.

In some aspects of slot aggregation, the RV to be applied on the *n^{th}* transmission occasion of a TB is given according to Table 1, *infra,* in which n = 0, 1, ..., pdsch*-AggregationFactor* - 1 and "*rv_{id}* indicated by the DCI scheduling the PDSCH" in Table 1 is assumed to be zero (0) for a PDSCH scheduled without a corresponding PDCCH transmission using *sps-Config* and activated by DCI format 1 1 or 1 2.

**Table 1**

| ***rv_{id}* indicated by the DCI scheduling the PDSCH** | ***rv_{id}* to be applied to *n*^{th} transmission occasion** | | | |
|---|---|---|---|---|
| | ***n* mod 4 = 0** | ***n* mod 4=1** | ***n* mod 4 = 2** | ***n* mod 4 = 3** |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

When *the pdsch-AggregationFactor* parameter is configured in a *pdsch-config* IE, the SLIV for all aggregated slots may be the same. A transmitter (e.g., a network node or another UE) may sequentially read coded bits from the data buffer based on the RV order given in Table 1.

In some aspects, a UE may find the DCI scheduling the PDSCH that carries RSMA messaging in a search space of a CORESET. The CORESET may be configured for the UE via a *pdcch-Config* IE having a *ControlResourceSet* field with *a frequencyDomainResources* parameter (e.g., corresponding to the L1 parameter *CORESET-freq-dom)* specifying the frequency resources in a BWP assigned to the UE and a *duration* parameter specifying the contiguous time duration of the CORESET in number of symbols.

Similarly, the search space may be configured for the UE via a *SearchSpace* field included in the *pdcch-Config* IE. The *SearchSpace* field may include a *controlResourceSetId* parameter that indicates the CORESET applicable to the search space, a *monitoringSlotPeriodicityAndOffset* parameter that indicates the slot(s) for PDCCH monitoring configured as a periodicity and offset (e.g., corresponding to the L1 parameters *Monitoring-periodicity-PDCCH-slot* and *Monitoring-offset-PDCCH-slot,* respectively), and a *monitoringSymbolsWithinSlot* parameter that indicates the symbol(s) for PDCCH monitoring in the slots configured for PDCCH monitoring, as indicated via the aforementioned *monitoringSlotPeriodicityAndOffset* parameter (e.g., a value of '1000000000000' may indicate that the UE should begin searching from the first OFDM symbol of a PDCCH slot, a value of '0100000000000' may indicate that the UE should begin searching from the second OFDM symbol of a PDCCH slot, etc.).

Some devices configured to communicate in various RANs and other wireless communication networks may be configured to achieve diversity in the frequency domain and/or the time domain according to various schemes. For example, some devices configured for communication in 5G NR networks with Release 15 or Release 16 capabilities may achieve frequency domain diversity through non-contiguous RBs within a relatively wide BWP; however, frequency hopping may be incompatible (e.g., on the downlink). Similarly, some devices configured for communication in 5G NR networks with Release 15 or Release 16 capabilities may achieve time domain diversity through multi-slot aggregation (e.g., on the PDSCH), such as multi-slot repetition on the same symbol allocation across a certain number of consecutive slots (e.g., two, four, or eight slots, as configured by a pdsch*-AggregationFactor* parameter).

The foregoing techniques and mechanisms may be applied to RSMA messaging, which may increase throughput, reduce latency, and improve reliability. As RSMA messages are split into common and private parts, repetition may be applied to only the common part, only the private part, or both the common and private parts. In some aspects in which both the common part and private part of an individual message are repeated, a repetition pattern may be configured to include repetitions of each of the common part and the private part of an individual message. In some aspects, the repetition factor (i.e., the number of repetitions) of the private part may be the same as or may be different from the repetition factor of the common part. That is, the private part may have a repetition factor of X, whereas the common part may have a repetition factor of *Y,* and *X* and *Y* may be equal or unequal.

In some aspects, a repetition pattern applied to the common part of an individual message and/or the private part of the individual message may be based on a respective priority or QoS for the common part and/or the private part. The priority or QoS of a common or private part may be related to the priority or QoS of the individual message from which the part of the individual message is derived. For example, if the individual message is associated with a relatively high priority or QoS, such as for ultra-reliable low-latency communications (URLLC), then the common part and/or the private part into which the individual message is divided may also be associated with a relatively high priority. In another example, a common message that is used for control signalling and/or carries information for multiple UEs may be associated with a relatively higher priority or QoS, e.g., because a greater number of UEs may benefit from the reliability of such a common message. Relatedly, a common message carrying information for only one UE and/or lacking any control signalling may be associated with a relatively lower priority.

As illustrated by the example repetition pattern 700, a rate-split individual message 712 may occupy one or more symbols of two slots 722, 724. In one example, the private part 714 of the individual message 712 may be associated with a priority or QoS that is relatively higher than the common part 716. Thus, the repetition pattern 700 may include a greater number of repetitions for the private part 714 than for the common part 716. For example, the repetition pattern 700 may be configured to include one or more symbols of three consecutive slots 726, 728, 730 following the individual message 712. Given the relatively lower priority and/or QoS of the common part 716, the repetition pattern for the common part 716 may be configured to include one or more symbols of two consecutive slots 732, 734 following the slots 726, 728, 730 occupied by the private part 714.

In some aspects, messages may be exchanged without rate splitting. Such messages may be referred to as "legacy" messages. Illustratively, some messages between a network node (e.g., gNB) and a UE transmitting on a sidelink channel may not employ rate-splitting for downlink and/or uplink messages. However, a legacy message 718 may be included as part of the repetition pattern 700. For example, a legacy message 718 may occupy any remaining slots (e.g., in a set of aggregated slots) that are not occupied by the common and private parts of a message and the repetitions thereof. In the illustrated aspect, the legacy message 718 may occupy the last slot 736, following the slots 722, 724 occupied by the individual message 712, the slots 726, 728, 730 occupied by the private part 714, and the slots 732, 734 occupied by the common part 716.

In some aspects, the repetition factor of the legacy message 718 may be the same as or different from the repetition factor of the private part 714 and/or the repetition factor of the common part 716. That is, the legacy message may be configured to have a repetition factor of Z, and Z may or may not be equal to the repetition factor *X* of the private part 714 and/or the repetition factor of *Y* of the common part 716. Each of the repetition factors *X, Y,* and Z may be configured via at least one of L1, L2, or L3 signalling. For example, a network node may configure at least one of *X, Y,* and/or Z and transmit an indication of the at least one of *X, Y,* and/or *Z* via a MAC control element (CE), RRC signalling message, DCI message, and/or another L1, L2, or L3 message.

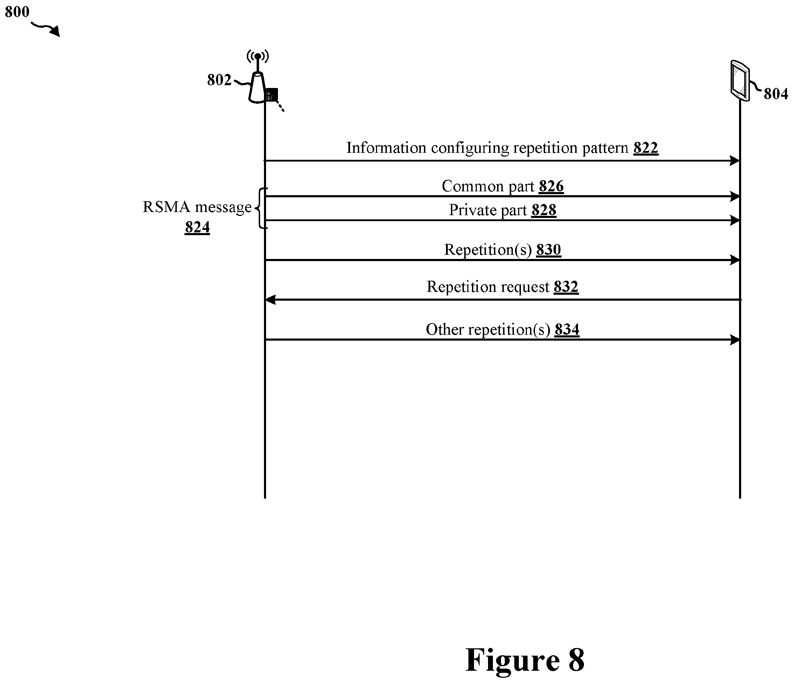

Figure 8 is a call flow diagram illustrating an example of communication flow 800 of RSMA messaging with repetition of at least one of a common part 826 or a private part 828 of an RSMA message 824. In some aspects, the transmitter 802 may be implemented as a base station, such as the base station 102/180 of **Figure 1** or the base station 410 of **Figure 4****,** or similar network node, such as the transmitter 502 of **Figure 5****.** In some other aspects, the transmitter 802 may be implemented as a UE, such as the UE 104 of **Figure 1** or the UE 450 of **Figure 4****.** The receiver 804 may be implemented as at least one of the UE 104 of **Figure 1****,** the UE 450 of **Figure 4****,** ones of the receivers 504a, 504b of **Figure 5****,** or the receiver 604 of **Figure 6****.**

The transmitter 802 may configure, for a receiver 804, a repetition pattern 822 that includes a number of repetitions of at least one of a common part 826 and/or a private part 828 of an RSMA message 824. For example, the repetition pattern 822 may configured across a set of aggregated consecutive slots, and the repetition pattern may define which of the aggregated consecutive slots includes repetitions of the common part 826 of the RSMA message 824 and/or which of the aggregated consecutive slots includes repetitions of the private part 828 of the RSMA message. An RV may indicate a position within a circular buffer of a repetition of the common part 826 or the private part 828.

The transmitter 802 may configure a repetition factor for one or more of the common part 826 and/or the private part 828 of the RSMA message 824. In some aspects, the transmitter 802 may further configure a repetition factor for a legacy message. For example, the transmitter 802 may configure at least one of a repetition factor *X* for the private part 828 of the RSMA message 824, a repetition factor *Y* for the common part 826 of the RSMA message, and/or a repetition factor *Z* for a legacy message.

The transmitter 802 may transmit, to the at least one receiver 804, information configuring a repetition pattern 822 of the at least one of the common part 826 of the RSMA message 824 or the private part 828 of the RSMA message 824. The transmitter 802 may transmit the information configuring the repetition pattern 822 via at least one of L1, L2, and/or L3 signalling. For example, the transmitter 802 may transmit the information configuring the repetition pattern 822 via at least one of a DCI message, an RRC signalling message, a MAC CE, and/or another L1, L2, and/or L3 signalling message. In some aspects, the information configuring the repetition pattern may include information configuring at least one of an aggregation factor for slot aggregation (e.g., pdsch*-AggregationFactor*), a CORESET, and/or a search space.

In some aspects, the transmitter 802 may configure the repetition pattern based on at least one of a priority or a QoS associated with the at least one of the common part of the RSMA message or the private part of the RSMA message. In some aspects, such as those in which the transmitter 802 is implemented as a UE, the at least one of the priority or the QoS may be indicated in sidelink control information (SCI), which may be carried on a sidelink channel (e.g., a PSCCH). For example, SCI may include a field associated with priority, and such a field may be populated with a value indicating the priority of the common part 826 and/or a value indicating the priority of the private part 828. In some other aspects, the repetition pattern may be based on whether the common part 826 of the RSMA message 824 includes control information and/or whether the common part 826 of the RSMA message 824 includes information for multiple receivers.

The receiver 804 may receive the information configuring the repetition pattern 822 from the transmitter 802. The receiver 804 may derive a set of resources to monitor to receive repetitions of the common part 826 and/or private part 828 of the message 824 based on the information configuring the repetition pattern 822. For example, the receiver 804 may derive the aggregation factor indicating which slots include repetitions of the common part 826 and/or private part 828 of the message 824, and the receiver 804 may derive the repetition factor(s) indicating how many slots include repetitions of the common part 826 and/or how many slots include repetitions of the private part 828 of the message 824.

In some aspects, the transmitter 802 may set an RSRP threshold associated with at least one of a first priority of the common part 826 of the RSMA message 824, a second priority of the private part 828 of the RSMA message 824, or a third priority of another message. For example, when the transmitter 802 is implemented as a UE, the transmitter 802 may sense the medium for a sidelink sensing operation to determine whether to transmit. The transmitter 802 may set an RSRP threshold based on the highest priority from among the priorities of the common part 826 and private part 828 of the RSMA message 824 the transmitter 802 is to transmit and the sidelink transmission that reserves the medium. For example, the transmitter 802 may detect a sidelink transmission reserving the medium that is associated with a lower priority, whereas each of the common part 826 and private part 828 of the RSMA message 824 to be transmitted by the transmitter 802 may be associated with a higher priority. Based on the comparative lower and higher priorities, the transmitter 802 may configure an RSRP threshold to be relatively higher than if the sidelink transmission reserving the medium were associated with a higher priority. In other words, the priority of the another sidelink transmission reserving the medium may be inversely proportional to the RSRP threshold - e.g., the higher the priority of the other sidelink transmission, the lower the transmitter 802 may set the RSRP threshold so as to avoid interfering with higher priority transmissions.

The transmitter 802 may transmit, to the at least one receiver 804, the RSMA message 824 separated into the common part 826 and the private part 828 (e.g., as described with respect to **Figure 5****,** *supra*). Further, the transmitter 802 may transmit, to the at least one receiver 804, at least one repetition(s) 830 of the at least one of the common part 826 of the RSMA message 824 or the private part 828 of the RSMA message 824 according to the repetition pattern. In some aspects in which the transmitter 802 is implemented as a UE, the transmitter 802 may transmit the common part 826 of the RSMA message 824 and the private part 828 of the RSMA message 824 on a sidelink channel in one of a same logical channel group or different logical channel groups when at least one of the common part 826 of the RSMA message 824 and/or the private part 828 of the RSMA message 824 are scheduled via a plurality of configured grants.

In some aspects in which the transmitter 802 is implemented as a UE, the transmitter 802 may perform a sidelink sensing procedure in order to sense the medium before transmitting. For example, the transmitter 802 may measure the energy or power on resources of a sidelink channel, and the transmitter 802 may compare the value obtained from measuring the energy or power with the RSRP threshold. Where the value fails to satisfy the RSRP threshold (e.g., the value is less than the RSRP threshold), the transmitter 802 may proceed with transmitting the at least one repetition(s) 830 of the at least one of the common part 826 of the RSMA message 824 or the private part 828 of the RSMA message 824 according to the repetition pattern. However, where the value satisfies the RSRP threshold (e.g., the value is greater than or equal to the RSRP threshold), the transmitter 802 may refrain from transmitting the at least one repetition of the at least one of the common part 826 of the RSMA message 824 or the private part 828 of the RSMA message 824 according to the repetition pattern. For example, the transmitter 802 may back off of transmission for a certain time period and/or the transmitter 802 may sense the medium until an energy or power is measured that does not satisfy the RSRP threshold.

The receiver 804 may receive the common part 826 and private part 828 of the RSMA message 824 and/or one or more repetition(s) thereof. The receiver 804 may attempt to recover the RSMA message 824 using the common part 826 and private part 828 of the RSMA message 824 and/or one or more repetition(s) thereof (e.g., as described with respect to **Figure 6****,** *supra*).

However, the receiver 804 may be unsuccessful in recovering the RSMA message 824. For example, the receiver 804 may fail to successfully receive the common part 826 and/or the private part 828 and/or the one or more repetition(s) 830 thereof. In some aspects, the receiver 804 may transmit, to the transmitter 802, a request 832 for at least one other repetition of at least one of the common part 826 of the RSMA message 824 or the private part 828 of the RSMA message 824. In some aspects, the request 832 may indicate a repetition factor for the at least one other repetition of the at least one of the common part 826 of the RSMA message 824 or the private part 828 of the RSMA message 824. In some aspects, the receiver 804 may multiplex the request 832 with a HARQ feedback message. For example, the request for at least one other repetition of the common part 826 of the RSMA message 824 may be multiplexed with a HARQ NACK for the common part 826 of the RSMA message 824. In some aspects, the transmitter 802 may allocate a set of periodic resources for such requests, and the receiver 804 may transmit the request 832 on the allocated set of periodic resources. The set of periodic resources may be scheduled to occur after the repetitions of the common part 826 and/or the private part 828 of the RSMA message 824, which may provide the receiver 804 sufficient time to perform CRC checks on the common message and the private message and determine whether those CRC checks failed, in which case another repetition(s) may be requested, or passed.

The transmitter 802 may receive the request 832, and based thereon, the transmitter 802 may transmit, to the at least one receiver 804, at least one other repetition(s) 834 of the at least one of the common part 826 of the RSMA message 824 or the private part 828 of the RSMA message 824. The transmitter 802 may configure the number of the other repetition(s) 834 according to the repetition factor indicated by the request 832.

The receiver 804 may receive the at least one other repetition(s) 834 of the common part 826 and/or private part 828. Using the at least one other repetition(s) 834, the receiver 804 may recover the RSMA message 824 that the receiver 804 may have been unsuccessful in recovering prior to requesting the other repetition(s) 834.

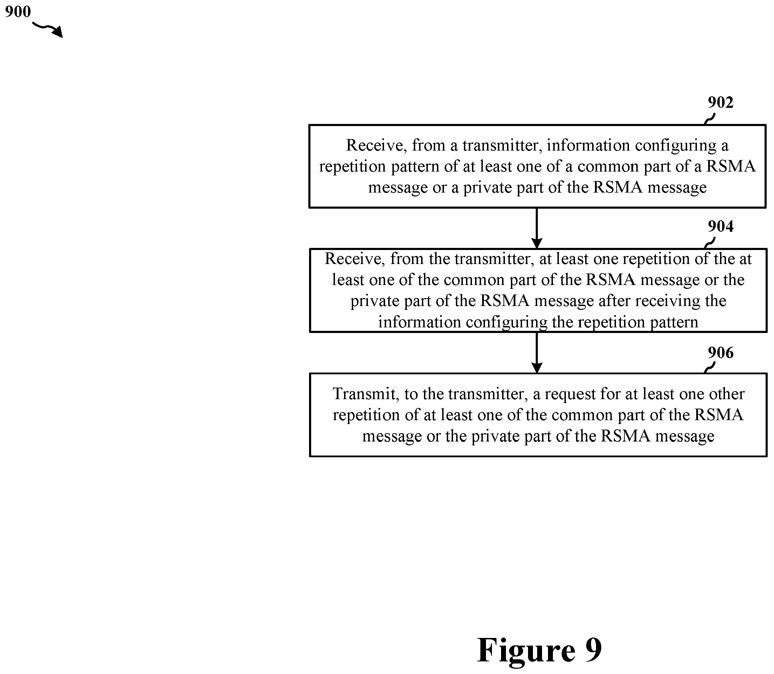

**Figure 9** is a flowchart of a method 900 of wireless communication. The method may be performed by or at a receiver, such as a UE (e.g., a UE 104, 450), another wireless communications apparatus (e.g., a receiver 504a, 504b, 604, 804 or an apparatus 1102), or one or more components thereof. According to various different aspects, one or more of the illustrated blocks may be omitted, transposed, and/or contemporaneously performed.

At 902, the receiver may receive, from a transmitter, information configuring a repetition pattern of at least one of a common part of a RSMA message or a private part of the RSMA message. In some aspects, the transmitter may be a base station or other network node. In some other aspects, the transmitter may be a UE configured to communicate with the receiver on one or more sidelink channels. In some aspects, the common part of the RSMA message may be common to a plurality of receivers (e.g., UEs), and the private part of the RSMA message may be specific to the receiver. The repetition pattern may indicate at least one of a repetition factor X for the private part of the RSMA message, a repetition factor *Y* for the common part of the RSMA message, and/or a repetition factor Z for a legacy message.

The receiver may receive the information configuring the repetition pattern via at least one of L1, L2, and/or L3 signalling. For example, the receiver may receive the information configuring the repetition pattern via at least one of a DCI message, an RRC signalling message, a MAC CE, and/or another L1, L2, and/or L3 signalling message. In some aspects, the information configuring the repetition pattern may include information configuring at least one of an aggregation factor for slot aggregation (e.g., pdsch*-AggregationFactor*), a CORESET, and/or a search space.

In some aspects, the repetition pattern may be based on at least one of a priority or a QoS associated with the at least one of the common part of the RSMA message or the private part of the RSMA message. The at least one of the priority or the QoS may be indicated in SCI. In some other aspects, the repetition pattern may be based on whether the common part of the RSMA message includes control information and/or whether the common part of the RSMA message includes information for multiple receivers.

In the context of **Figure 7****,** for example, the repetition pattern 700 may indicate at least one of a first set of slots 722, 724 allocated to carry the individual message 712, a second set of slots 726, 728, 730 allocated to carry repetitions of the private part 714 of the individual message 712, a third set of slots 732, 734 allocated to carry repetitions of the common part 716 of the individual message 712, and/or a fourth set of slots 736 allocated to carry a legacy message 718. In the context of **Figure 8****,** for example, the receiver 804 may receive the information configuring the repetition pattern 822 from the transmitter 802.

At 904, the receiver may receive, from the transmitter, at least one repetition of the at least one of the common part of the RSMA message or the private part of the RSMA message after receiving the information configuring the repetition pattern. In some aspects, the common part of the RSMA message and the private part of the RSMA message are received on a sidelink channel in one of a same logical channel group or different logical channel groups when the common part of the RSMA message and the private part of the RSMA message are scheduled via a plurality of configured grants.

In the context of **Figure 7****,** for example, a receiver may receive one or more repetitions of a private part 714 of an individual message 712 on one set of symbols 726, 728, 730 and/or one or more repetitions of a common part 716 of the individual message 712 on another set of symbols 732, 734. In the context of **Figure 8****,** for example, the receiver 804 may receive, from the transmitter 802, the repetition(s) 830 of at least one of the common part 826 and/or the private part 828 of the RSMA message 824.

At 906, the receiver may transmit, to the transmitter, a request for at least one other repetition of at least one of the common part of the RSMA message or the private part of the RSMA message. In some aspects, the request may indicate a repetition factor for the at least one other repetition of the at least one of the common part of the RSMA message or the private part of the RSMA message. In some aspects, the receiver may multiplex the request with a HARQ feedback message. For example, the receiver may multiplex a request for at least one other repetition of the common part of the RSMA message with a HARQ NACK for the common part of the RSMA message. In some aspects, a set of periodic resources may be allocated for such requests, and the receiver may transmit the request on the allocated set of periodic resources. The set of periodic resources may be scheduled to occur after the repetitions of the common part and/or the private part of an RSMA message, which may provide the receiver sufficient time to perform CRC checks on the common message and the private message and determine whether those CRC checks failed, in which case another repetition(s) may be requested, or passed.

In the context of **Figure 8****,** for example, the receiver 804 may transmit the repetition request 832 to the transmitter 802. The repetition request 832 may indicate a request for at least one other repetition of the common part 826 and/or the private part 828 of the RSMA message 824. Based on the repetition request 832, the receiver 804 may receive, from the transmitter 802, at least one other repetition 834 of the common part 826 and/or the private part 828 of the RSMA message 824.

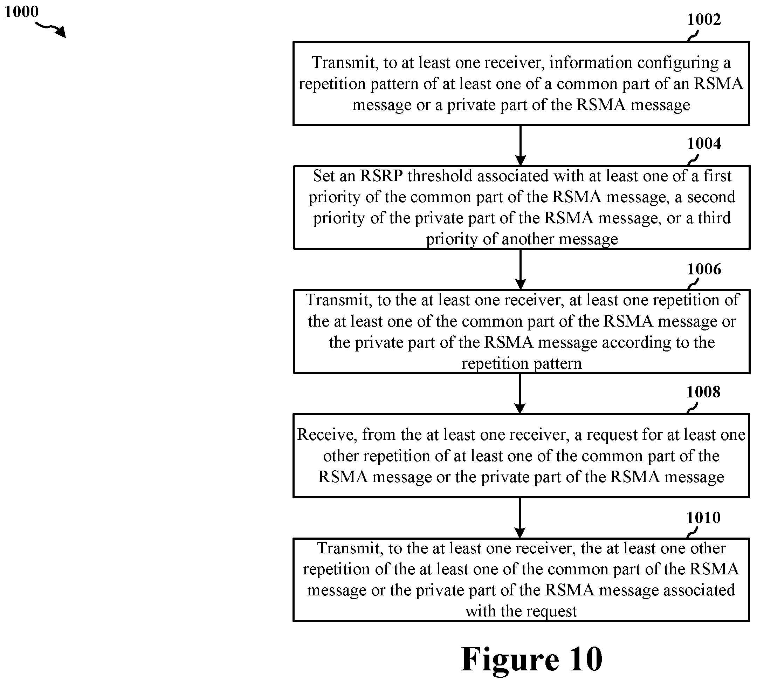

**Figure 10** is a flowchart of a method 1000 of wireless communication. In some aspects, the method 1000 may be performed by or at a transmitter, such as a base station or network node (e.g., the base station 102/180, 410), a UE (e.g., the UE 104, 450), another wireless communications apparatus (e.g., the transmitter 502, 802, the apparatus 1102, or the apparatus 1202), or one or more components thereof. According to various different aspects, one or more of the illustrated blocks may be omitted, transposed, and/or contemporaneously performed.

At 1002, the transmitter may transmit, to at least one receiver, information configuring a repetition pattern of at least one of a common part of an RSMA message or a private part of the RSMA message. In some aspects, the common part of the RSMA message may be common to a plurality of receivers (e.g., UEs), and the private part of the RSMA message may be specific to the receiver. The repetition pattern may indicate at least one of a repetition factor *X* for the private part of the RSMA message, a repetition factor *Y* for the common part of the RSMA message, and/or a repetition factor Z for a legacy message.

The transmitter may transmit the information configuring the repetition pattern via at least one of L1, L2, and/or L3 signalling. For example, the transmitter may transmit the information configuring the repetition pattern via at least one of a DCI message, an RRC signalling message, a MAC CE, and/or another L1, L2, and/or L3 signalling message. In some aspects, the information configuring the repetition pattern may include information configuring at least one of an aggregation factor for slot aggregation (e.g., pdsch*-AggregationFactor*), a CORESET, and/or a search space.

In some aspects, the repetition pattern may be based on at least one of a priority or a QoS associated with the at least one of the common part of the RSMA message or the private part of the RSMA message. The at least one of the priority or the QoS may be indicated in SCI. In some other aspects, the repetition pattern may be based on whether the common part of the RSMA message includes control information and/or whether the common part of the RSMA message includes information for multiple receivers.

In the context of **Figure 7****,** for example, the repetition pattern 700 may indicate at least one of a first set of slots 722, 724 allocated to carry the individual message 712, a second set of slots 726, 728, 730 allocated to carry repetitions of the private part 714 of the individual message 712, a third set of slots 732, 734 allocated to carry repetitions of the common part 716 of the individual message 712, and/or a fourth set of slots 736 allocated to carry a legacy message 718. In the context of **Figure 8****,** for example, the transmitter 802 may transmit the information configuring the repetition pattern 822 to the receiver 804.

At 1004, the transmitter may set an RSRP threshold associated with at least one of a first priority of the common part of the RSMA message, a second priority of the private part of the RSMA message, or a third priority of another message. For example, when the transmitter is implemented as a UE, the transmitter may sense the medium for a sidelink sensing operation to determine whether to transmit. The transmitter may set an RSRP threshold based on the highest priority from among the priorities of the common part and private part of the RSMA message the transmitter is to transmit and the sidelink transmission that reserves the medium. For example, the transmitter may detect a sidelink transmission reserving the medium that is associated with a lower priority, whereas each of the common and private parts of the RSMA message to be transmitted by the transmitter may be associated with a higher priority. Based on the comparative lower and higher priorities, the transmitter may configure an RSRP threshold to be relatively higher than if the sidelink transmission reserving the medium were associated with a higher priority. In other words, the priority of the another sidelink transmission reserving the medium may be inversely proportional to the RSRP threshold - e.g., the higher the priority of the other sidelink transmission, the lower the transmitter may set the RSRP threshold so as to avoid interfering with higher priority transmissions.

In the context of **Figure 8****,** for example, the transmitter 802 may set an RSRP threshold associated with at least one of a first priority of the common part 826 of the RSMA message 824, a second priority of the private part 828 of the RSMA message 824, or a third priority of another message.

At 1006, the transmitter may transmit, to the at least one receiver, at least one repetition of the at least one of the common part of the RSMA message or the private part of the RSMA message according to the repetition pattern. In some aspects in which the transmitter is implemented as a UE, the transmitter may transmit the common part of the RSMA message and the private part of the RSMA message on a sidelink channel in one of a same logical channel group or different logical channel groups when at least one of the common part of the RSMA message and/or the private part of the RSMA message are scheduled via a plurality of configured grants.

In some aspects in which the transmitter is implemented as a UE, the transmitter may perform a sidelink sensing procedure in order to sense the medium before transmitting. For example, the transmitter may measure the energy or power on resources of a sidelink channel, and the transmitter may compare the value obtained from measuring the energy or power with the RSRP threshold. Where the value fails to satisfy the RSRP threshold (e.g., the value is less than the RSRP threshold), the transmitter may proceed with transmitting the at least one repetition of the at least one of the common part of the RSMA message or the private part of the RSMA message according to the repetition pattern. However, where the value satisfies the RSRP threshold (e.g., the value is greater than or equal to the RSRP threshold), the transmitter may refrain from transmitting the at least one repetition of the at least one of the common part of the RSMA message or the private part of the RSMA message according to the repetition pattern. For example, the transmitter may back off of transmission for a certain time period and/or the transmitter may sense the medium until an energy or power is measured that does not satisfy the RSRP threshold.

In the context of Figure **7****,** for example, a transmitter may transmit one or more repetitions of a private part 714 of an individual message 712 on one set of symbols 726, 728, 730 and/or one or more repetitions of a common part 716 of the individual message 712 on another set of symbols 732, 734. In the context of **Figure 8****,** for example, the transmitter 802 may transmit, to the receiver 804, the repetition(s) 830 of at least one of the common part 826 and/or the private part 828 of the RSMA message 824.

At 1008, the transmitter may receive, from the at least one receiver, a request for at least one other repetition of at least one of the common part of the RSMA message or the private part of the RSMA message. In some aspects, the request may indicate a repetition factor for the at least one other repetition of the at least one of the common part of the RSMA message or the private part of the RSMA message. In some aspects, the transmitter may receive the request multiplexed with a HARQ feedback message. For example, the request for at least one other repetition of the common part of the RSMA message may be multiplexed with a HARQ NACK for the common part of the RSMA message. In some aspects, the transmitter may allocate a set of periodic resources for such requests, and the transmitter may receive the request on the allocated set of periodic resources. The set of periodic resources may be scheduled to occur after the repetitions of the common part and/or the private part of an RSMA message, which may provide the receiver sufficient time to perform CRC checks on the common message and the private message and determine whether those CRC checks failed, in which case another repetition(s) may be requested, or passed.

In the context of **Figure 8****,** for example, the transmitter 802 may receive the repetition request 832 from the receiver 804. The repetition request 832 may indicate a request for at least one other repetition of the common part 826 and/or the private part 828 of the RSMA message 824. Based on the repetition request 832, the transmitter 802 may transmit, to the receiver 804, at least one other repetition 834 of the common part 826 and/or the private part 828 of the RSMA message 824.

At 1010, the transmitter may transmit, to the at least one receiver, the at least one other repetition of the at least one of the common part of the RSMA message or the private part of the RSMA message associated with the request.

In the context of **Figure 8****,** for example, the transmitter 802 may receive the repetition request 832 from the receiver 804. The repetition request 832 may indicate a request for at least one other repetition of the common part 826 and/or the private part 828 of the RSMA message 824. Based on the repetition request 832, the transmitter 802 may transmit, to the receiver 804, at least one other repetition 834 of the common part 826 and/or the private part 828 of the RSMA message 824.

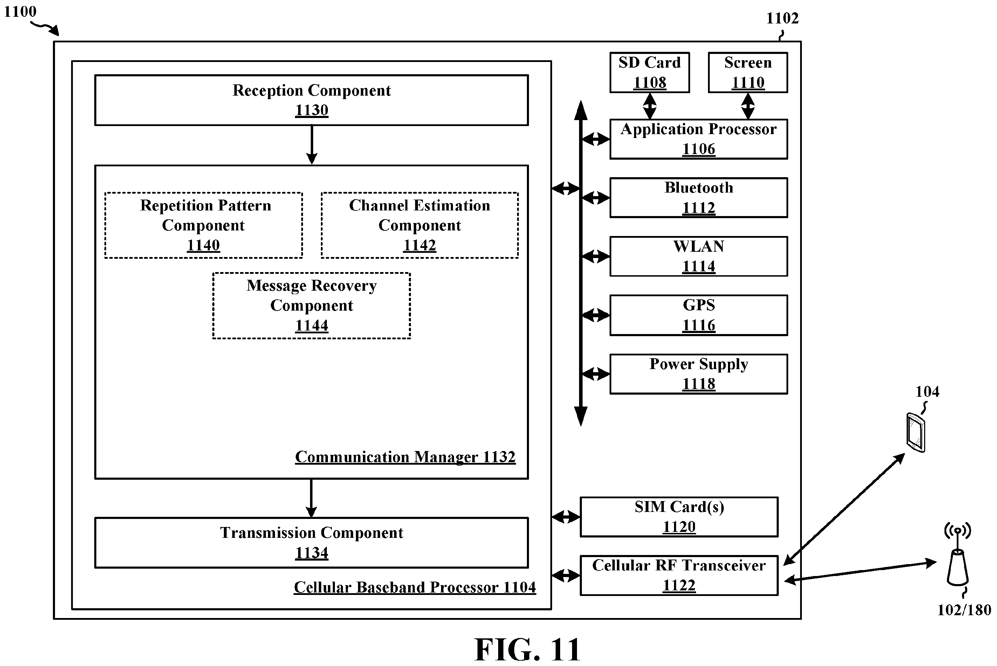

**Figure 11** is a diagram 1100 illustrating an example of a hardware implementation for an apparatus 1102. The apparatus 1102 may be a UE or similar device, or the apparatus 1102 may be a component of a UE or similar device. The apparatus 1102 may include a cellular baseband processor 1104 (also referred to as a modem) and/or a cellular RF transceiver 1122, which may be coupled together and/or integrated into the same package, component, circuit, chip, and/or other circuitry.

In some aspects, the apparatus 1102 may accept or may include one or more subscriber identity modules (SIM) cards 1120, which may include one or more integrated circuits, chips, or similar circuitry, and which may be removable or embedded. The one or more SIM cards 1120 may carry identification and/or authentication information, such as an international mobile subscriber identity (IMSI) and/or IMSI-related key(s). Further, the apparatus 1102 may include one or more of an application processor 1106 coupled to a secure digital (SD) card 1108 and a screen 1110, a Bluetooth module 1112, a wireless local area network (WLAN) module 1114, a Global Positioning System (GPS) module 1116, and/or a power supply 1118.

The cellular baseband processor 1104 communicates through the cellular RF transceiver 1122 with the UE 104 and/or base station 102/180. The cellular baseband processor 1104 may include a computer-readable medium / memory. The computer-readable medium / memory may be non-transitory. The cellular baseband processor 1104 is responsible for general processing, including the execution of software stored on the computer-readable medium / memory. The software, when executed by the cellular baseband processor 1104, causes the cellular baseband processor 1104 to perform the various functions described *supra.* The computer-readable medium / memory may also be used for storing data that is manipulated by the cellular baseband processor 1104 when executing software. The cellular baseband processor 1104 further includes a reception component 1130, a communication manager 1132, and a transmission component 1134. The communication manager 1132 includes the one or more illustrated components. The components within the communication manager 1132 may be stored in the computer-readable medium / memory and/or configured as hardware within the cellular baseband processor 1104.

In the context of **Figure 4****,** the cellular baseband processor 1104 may be a component of the UE 450 and may include the memory 460 and/or at least one of the TX processor 468, the RX processor 456, and/or the controller/processor 459. In one configuration, the apparatus 1102 may be a modem chip and/or may be implemented as the baseband processor 1104, while in another configuration, the apparatus 1102 may be the entire UE (e.g., the UE 450 of **Figure 4**) and may include some or all of the abovementioned components, circuits, chips, and/or other circuitry illustrated in the context of the apparatus 1102. In one configuration, the cellular RF transceiver 1122 may be implemented as at least one of the transmitter 454TX and/or the receiver 454RX.

The reception component 1130 may be configured to receive signaling on a wireless channel, such as signalling from a transmitter (e.g., a base station 102/180 or a UE 104). The transmission component 1134 may be configured to transmit signaling on a wireless channel, such as signalling to a transmitter (e.g., a base station 102/180 or a UE 104). The communication manager 1132 may coordinate or manage some or all wireless communications by the apparatus 1102, including across the reception component 1130 and the transmission component 1134.

The reception component 1130 may provide some or all data and/or control information included in received signaling to the communication manager 1132, and the communication manager 1132 may generate and provide some or all of the data and/or control information to be included in transmitted signaling to the transmission component 1134. The communication manager 1132 may include the various illustrated components, including one or more components configured to process received data and/or control information, and/or one or more components configured to generate data and/or control information for transmission. For example, the communication manager 1132 may include a repetition pattern component 1140, a channel estimation component 1142, and a message recovery component 1144.

The repetition pattern component 1140 may be configured to receive, from a transmitter, information configuring a repetition pattern of at least one of a common part of a RSMA message or a private part of the RSMA message, e.g., as described in connection with 902 of **Figure 9****.** In some aspects, the transmitter may be a base station 102/180 or other network node. In some other aspects, the transmitter may be a UE 104 configured to communicate with the receiver on one or more sidelink channels. In some aspects, the common part of the RSMA message may be common to a plurality of receivers (including the apparatus 1102), and the private part of the RSMA message may be specific to the apparatus 1102. The repetition pattern may indicate at least one of a repetition factor *X* for the private part of the RSMA message, a repetition factor *Y* for the common part of the RSMA message, and/or a repetition factor Z for a legacy message.

The repetition pattern component 1140 may receive the information configuring the repetition pattern via at least one of L1, L2, and/or L3 signalling. For example, the repetition pattern component 1140 may receive the information configuring the repetition pattern via at least one of a DCI message, an RRC signalling message, a MAC CE, and/or another L1, L2, and/or L3 signalling message. In some aspects, the information configuring the repetition pattern may include information configuring at least one of an aggregation factor for slot aggregation (e.g., *pdsch-AggregationFactor*), a CORESET, and/or a search space.

In some aspects, the repetition pattern may be based on at least one of a priority or a QoS associated with the at least one of the common part of the RSMA message or the private part of the RSMA message. The at least one of the priority or the QoS may be indicated in SCI. In some other aspects, the repetition pattern may be based on whether the common part of the RSMA message includes control information and/or whether the common part of the RSMA message includes information for multiple receivers.

The reception component 1130 may receive, from the transmitter, at least one repetition of at least one of the common part of the RSMA message or the private part of the RSMA message after receiving the information configuring the repetition pattern, e.g., as described in connection with 904 of **Figure 9****.** In some aspects, the common part of the RSMA message and the private part of the RSMA message are received on a sidelink channel in one of a same logical channel group or different logical channel groups when the common part of the RSMA message and the private part of the RSMA message are scheduled via a plurality of configured grants.

The channel estimation component 1142 may receive, through the reception component 1130, the common part of the RSMA message or at least one repetition thereof. The channel estimation component 1142 may decode the common part of the RSMA message, and may estimate the channel using the common part of the RSMA message.

The message recovery component 1144 may perform successive interference cancellation based on the channel estimation from the common part of the RSMA message in order to recover the private part of the RSMA message. The message recovery component 1144 may combine the common part of the RSMA message and the private part of the RSMA message to recover the individual message transmitted by the transmitter.

If, however, the message recovery component 1144 is unable to successfully recover the individual message, then additional repetitions of the common part and/or the private part of the message may be requested.

The transmission component 1134 may transmit, to the transmitter, a request for at least one other repetition of at least one of the common part of the RSMA message or the private part of the RSMA message, e.g., as described in connection with 906 of **Figure 9****.** In some aspects, the request may indicate a repetition factor for the at least one other repetition of the at least one of the common part of the RSMA message or the private part of the RSMA message. In some aspects, the transmission component 1134 may multiplex the request with a HARQ feedback message. For example, the transmission component 1134 may multiplex a request for at least one other repetition of the common part of the RSMA message with a HARQ NACK for the common part of the RSMA message. In some aspects, a set of periodic resources may be allocated for such requests, and the transmission component 1134 may transmit the request on the allocated set of periodic resources. The set of periodic resources may be scheduled to occur after the repetitions of the common part and/or the private part of an RSMA message, which may provide the message recovery component 1144 sufficient time to perform CRC checks on the common message and the private message and determine whether those CRC checks failed, in which case another repetition(s) may be requested, or passed.

The apparatus 1102 may include additional components that perform some or all of the blocks, operations, signaling, etc. of the algorithm(s) in the aforementioned call flow diagram and/or flowchart of **Figures 8** and **9****.** As such, some or all of the blocks, operations, signaling, etc. in the aforementioned call flow diagram and/or flowchart of **Figures 8** and **9** may be performed by one or more components and the apparatus 1102 may include one or more such components. The components may be one or more hardware components specifically configured to carry out the stated processes/algorithm, implemented by a processor configured to perform the stated processes/algorithm, stored within a computer-readable medium for implementation by a processor, or some combination thereof.

In one configuration, the apparatus 1102, and in particular the cellular baseband processor 1104, includes means for receiving, from an apparatus, information configuring a repetition pattern of at least one of a common part of an RSMA message or a private part of the RSMA message; and means for receiving, from the apparatus, at least one repetition of the at least one of the common part of the RSMA message or the private part of the RSMA message after receiving the information configuring the repetition pattern.

In one configuration, the common part of the RSMA message is common to a plurality of UEs and wherein the private part of the RSMA message is specific to the apparatus 1102.

In one configuration, the repetition pattern is based on at least one of a priority or a QoS associated with the at least one of the common part of the RSMA message or the private part of the RSMA message.

In one configuration, the at least one of the priority or the QoS is included in SCI.

In one configuration, the repetition pattern comprises at least one of a first repetition factor associated with the common part of the RSMA message or a second repetition factor associated with the private part of the RSMA message.

In one configuration, the information configuring the repetition pattern is received via at least one of L1, L2, or L3 signalling.

In one configuration, the repetition pattern is based on whether the common part of the RSMA message includes control information.

In one configuration, the common part of the RSMA message and the private part of the RSMA message are received on a sidelink channel in one of a same logical channel group or different logical channel groups when the common part of the RSMA message and the private part of the RSMA message are scheduled via a plurality of configured grants.

In one configuration, the apparatus 1102, and in particular the cellular baseband processor 1104, may include means for transmitting, to the transmitter, a request for at least one other repetition of at least one of the common part of the RSMA message or the private part of the RSMA message.

In one configuration, the request is multiplexed with HARQ feedback.

In one configuration, the request indicates a repetition factor for the at least one other repetition of the at least one of the common part of the RSMA message or the private part of the RSMA message.

In one configuration, the request is transmitted on a set of periodic resources allocated to requests for other repetitions.

The aforementioned means may be one or more of the aforementioned components of the apparatus 1102 configured to perform the functions recited by the aforementioned means. As described *supra,* the apparatus 1102 may include the TX Processor 468, the RX Processor 456, and the controller/processor 459. As such, in one configuration, the aforementioned means may be the TX Processor 468, the RX Processor 456, and the controller/processor 459 configured to perform the functions recited by the aforementioned means.

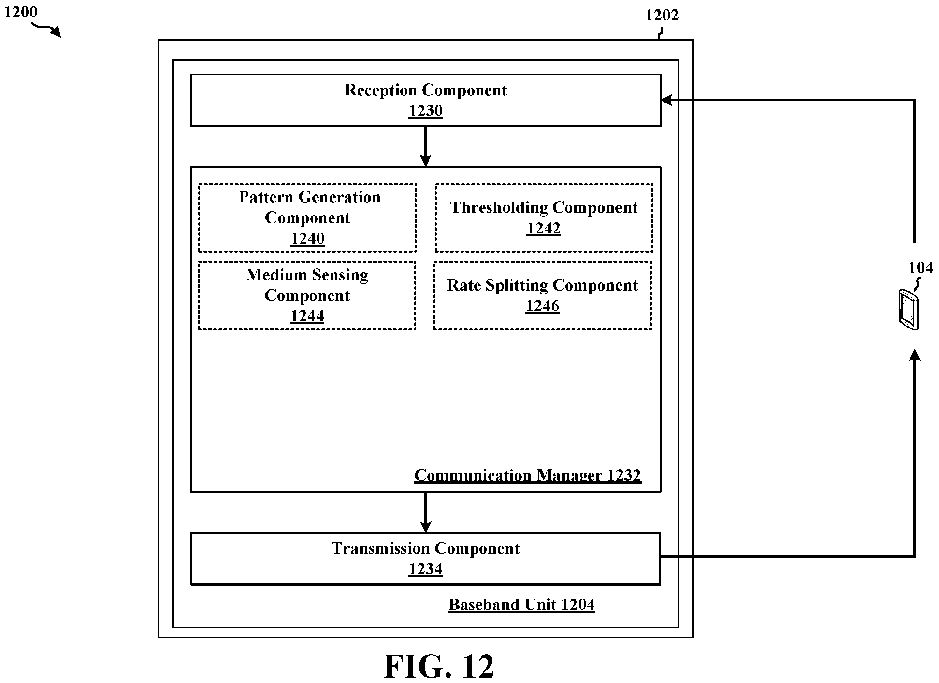

**Figure 12** is a diagram 1200 illustrating an example of a hardware implementation for an apparatus 1202. The apparatus 1202 may be a base station or similar device or system, or the apparatus 1202 may be a component of a base station or similar device or system. The apparatus 1202 may include a baseband unit 1204. The baseband unit 1204 may communicate through a cellular RF transceiver. For example, the baseband unit 1204 may communicate through a cellular RF transceiver with a UE 104, such as for downlink and/or uplink communication, and/or with a base station 102/180, such as for IAB.

The baseband unit 1204 may include a computer-readable medium / memory, which may be non-transitory. The baseband unit 1204 is responsible for general processing, including the execution of software stored on the computer-readable medium / memory. The software, when executed by the baseband unit 1204, causes the baseband unit 1204 to perform the various functions described *supra.* The computer-readable medium / memory may also be used for storing data that is manipulated by the baseband unit 1204 when executing software. The baseband unit 1204 further includes a reception component 1230, a communication manager 1232, and a transmission component 1234. The communication manager 1232 includes the one or more illustrated components. The components within the communication manager 1232 may be stored in the computer-readable medium / memory and/or configured as hardware within the baseband unit 1204. The baseband unit 1204 may be a component of the base station 410 and may include the memory 476 and/or at least one of the TX processor 416, the RX processor 470, and the controller/processor 475.

The reception component 1230 may be configured to receive signaling on a wireless channel, such as signaling from a receiver (e.g., the UE 104 or the base station 102/180). The transmission component 1234 may be configured to transmit signalling on a wireless channel to a receiver (e.g., the UE 104 or the base station 102/180). The communication manager 1232 may coordinate or manage some or all wireless communications by the apparatus 1202, including across the reception component 1230 and the transmission component 1234.

The reception component 1230 may provide some or all data and/or control information included in received signaling to the communication manager 1232, and the communication manager 1232 may generate and provide some or all of the data and/or control information to be included in transmitted signaling to the transmission component 1234. The communication manager 1232 may include the various illustrated components, including one or more components configured to process received data and/or control information, and/or one or more components configured to generate data and/or control information for transmission. In some aspects, the generation of data and/or control information may include packetizing or otherwise reformatting data and/or control information received from a core network, such as the core network 190 or the EPC 160, for transmission.

The communication manager 1232 may include a pattern generation component 1240, a thresholding component 1242, a medium sensing component 1244, and/or a rate-splitting component 1246. The pattern generation component 1240 may be configured to generate a pattern that specifies a respective repetition factor for at least one of a private part of an RSMA message, a common part of an RSMA message, and/or a legacy message (e.g., a message that is not rate split for transmission). The pattern generation component 1240 may be further configured to allocate resources for slot aggregation, which may carry the repetitions.

The transmission component 1234 may be configured to transmit, to at least one receiver, information configuring a repetition pattern of at least one of a common part of an RSMA message or a private part of the RSMA message, e.g., as described in connection with 1002 of **Figure 10****.** The repetition pattern may indicate at least one of a repetition factor *X* for the private part of the RSMA message, a repetition factor *Y* for the common part of the RSMA message, and/or a repetition factor Z for a legacy message.

The transmission component 1234 may transmit the information configuring the repetition pattern via at least one of L1, L2, and/or L3 signalling. For example, the transmission component 1234 may transmit the information configuring the repetition pattern via at least one of a DCI message, an RRC signalling message, a MAC CE, and/or another L1, L2, and/or L3 signalling message. In some aspects, the information configuring the repetition pattern may include information configuring at least one of an aggregation factor for slot aggregation (e.g., *pdsch-AggregationFactor*), a CORESET, and/or a search space.

In some aspects, the repetition pattern may be based on at least one of a priority or a QoS associated with the at least one of the common part of the RSMA message or the private part of the RSMA message. The at least one of the priority or the QoS may be indicated in SCI. In some other aspects, the repetition pattern may be based on whether the common part of the RSMA message includes control information and/or whether the common part of the RSMA message includes information for multiple receivers.

The thresholding component 1242 may be configured to set an RSRP threshold associated with at least one of a first priority of the common part of the RSMA message, a second priority of the private part of the RSMA message, or a third priority of another message, e.g., as described in connection with 1004 of **Figure 10****.** For example, when the transmitter is implemented as a UE, the medium sensing component 1244 may sense the medium for a sidelink sensing operation to determine whether to transmit. The thresholding component 1242 may set an RSRP threshold based on the highest priority from among the priorities of the common part and private part of the RSMA message that the transmission component 1234 is to transmit and the sidelink transmission that reserves the medium. For example, the medium sensing component 1244 may detect a sidelink transmission reserving the medium that is associated with a lower priority, whereas each of the common and private parts of the RSMA message to be transmitted by the transmission component 1234 may be associated with a higher priority. Based on the comparative lower and higher priorities, the thresholding component 1242 may configure an RSRP threshold to be relatively higher than if the sidelink transmission reserving the medium were associated with a higher priority. In other words, the priority of the another sidelink transmission reserving the medium may be inversely proportional to the RSRP threshold - e.g., the higher the priority of the other sidelink transmission, the lower the thresholding component 1242 may set the RSRP threshold so as to avoid interfering with higher priority transmissions.

The rate splitting component 1246 may be configured to separate an individual RSMA message into a common part and a private part. In some aspects, the common part of the RSMA message may be common to a plurality of receivers (e.g., UEs), and the private part of the RSMA message may be specific to the receiver.

The transmission component 1234 may be configured to transmit, to the at least one receiver, at least one repetition of the at least one of the common part of the RSMA message or the private part of the RSMA message according to the repetition pattern, e.g., as described in connection with 1006 of **Figure 10****.** In some aspects in which the apparatus 1202 is implemented as a UE, the transmission component 1234 may transmit the common part of the RSMA message and the private part of the RSMA message on a sidelink channel in one of a same logical channel group or different logical channel groups when at least one of the common part of the RSMA message and/or the private part of the RSMA message are scheduled via a plurality of configured grants.

In some aspects in which the apparatus 1202 is implemented as a UE, the medium sensing component 1244 may be configured to perform a sidelink sensing procedure in order to sense the medium before transmitting. For example, the medium sensing component 1244 may measure the energy or power on resources of a sidelink channel, and the medium sensing component 1244 may compare the value obtained from measuring the energy or power with the RSRP threshold. Where the value fails to satisfy the RSRP threshold (e.g., the value is less than the RSRP threshold), the transmission component 1234 may proceed with transmitting the at least one repetition of the at least one of the common part of the RSMA message or the private part of the RSMA message according to the repetition pattern. However, where the value satisfies the RSRP threshold (e.g., the value is greater than or equal to the RSRP threshold), the transmission component 1234 may refrain from transmitting the at least one repetition of the at least one of the common part of the RSMA message or the private part of the RSMA message according to the repetition pattern. For example, the transmission component 1234 may back off of transmission for a certain time period and/or the medium sensing component 1244 may sense the medium until an energy or power is measured that does not satisfy the RSRP threshold.

The reception component 1230 may receive, from the at least one receiver, a request for at least one other repetition of at least one of the common part of the RSMA message or the private part of the RSMA message, e.g., as described in connection with 1008 of Figure 10. In some aspects, the request may indicate a repetition factor for the at least one other repetition of the at least one of the common part of the RSMA message or the private part of the RSMA message. In some aspects, the reception component 1230 may receive the request multiplexed with a HARQ feedback message. For example, the request for at least one other repetition of the common part of the RSMA message may be multiplexed with a HARQ NACK for the common part of the RSMA message. In some aspects, a set of periodic resources may be allocated for such requests, and the reception component 1230 may receive the request on the allocated set of periodic resources. The set of periodic resources may be scheduled to occur after the repetitions of the common part and/or the private part of an RSMA message, which may provide the receiver sufficient time to perform CRC checks on the common message and the private message and determine whether those CRC checks failed, in which case another repetition(s) may be requested, or passed.

The transmission component 1234 may transmit, to the at least one receiver, the at least one other repetition of the at least one of the common part of the RSMA message or the private part of the RSMA message associated with the request, e.g., as described in connection with 1010 of **Figure 10****.**

The apparatus 1202 may include additional components that perform some or all of the blocks, operations, signaling, etc. of the algorithm(s) in the aforementioned call flow diagram and/or flowchart of **Figures 8** and **10****,** respectively. As such, some or all of the blocks, operations, signaling, etc. in the aforementioned call flow diagram and/or flowchart of **Figures 8** and **10** may be performed by a component and the apparatus 1202 may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

In one configuration, the apparatus 1202, and in particular the baseband unit 1204, includes means for transmitting, to at least one UE, information configuring a repetition pattern of at least one of a common part of a RSMA message or a private part of the RSMA message; and means for transmitting, to the at least one UE, at least one repetition of the at least one of the common part of the RSMA message or the private part of the RSMA message according to the repetition pattern.

In one configuration, the common part of the RSMA message is common to a plurality of UEs and wherein the private part of the RSMA message is specific to the at least one UE.

In one configuration, the repetition pattern is based on at least one of a priority or a QoS associated with the at least one of the common part of the RSMA message or the private part of the RSMA message.

In one configuration, the at least one of the priority or the QoS is included in SCI.

In one configuration, the repetition pattern comprises at least one of a first repetition factor associated with the common part of the RSMA message or a second repetition factor associated with the private part of the RSMA message.

In one configuration, the information configuring the repetition pattern is transmitted via at least one of L1, L2, or L3 signalling.

In one configuration, the repetition pattern is based on whether the common part of the RSMA message includes control information.

In one configuration, the common part of the RSMA message and the private part of the RSMA message are transmitted on a sidelink channel in one of a same logical channel group or different logical channel groups when the common part of the RSMA message and the private part of the RSMA message are scheduled via a plurality of configured grants.

In one configuration, the apparatus 1202, and in particular the baseband unit 1204, may further include means for receiving, from the at least UE, a request associated with at least one other repetition of at least one of the common part of the RSMA message or the private part of the RSMA message; and means for transmitting, to the at least one UE, the at least one other repetition of the at least one of the common part of the RSMA message or the private part of the RSMA message associated with the request.

In one configuration, the request is multiplexed with HARQ feedback.

In one configuration, the request indicates a repetition factor for the at least one other repetition of the at least one of the common part of the RSMA message or the private part of the RSMA message.

In one configuration, the request is transmitted on a set of periodic resources allocated to requests for other repetitions.

In one configuration, the apparatus 1202, and in particular the baseband unit 1204, may further include means for setting a RSRP threshold associated with at least one of a first priority of the common part of the RSMA message, a second priority of the private part of the RSMA message, or a third priority of another message.

In one configuration, the RSRP threshold is set based on a highest priority of the first priority, the second priority, or the third priority.

The aforementioned means may be one or more of the aforementioned components of the apparatus 1202 configured to perform the functions recited by the aforementioned means. As described supra, the apparatus 1202 may include the TX Processor 416, the RX Processor 470, and the controller/processor 475. As such, in one configuration, the aforementioned means may be the TX Processor 416, the RX Processor 470, and the controller/processor 475 configured to perform the functions recited by the aforementioned means.

The specific order or hierarchy of blocks or operations in each of the foregoing processes, flowcharts, and other diagrams disclosed herein is an illustration of example approaches. Based upon design preferences, the specific order or hierarchy of blocks or operations in each of the processes, flowcharts, and other diagrams may be rearranged, omitted, and/or contemporaneously performed without departing from the scope of the present disclosure. Further, some blocks or operations may be combined or omitted. The accompanying method claims present elements of the various blocks or operations in a sample order, and are not meant to be limited to the specific order or hierarchy presented.

The previous description is provided to enable one of ordinary skill in the art to practice the various aspects described herein. Various modifications to these aspects will be readily apparent to those having ordinary skill in the art, and the generic principles defined herein may be applied to other aspects. Thus, the claims are not intended to be limited to the aspects shown herein, but is to be accorded the full scope consistent with the language. Thus, the language employed herein is not intended to limit the scope of the claims to only those aspects shown herein, but is to be accorded the full scope consistent with the language of the claims.

As one example, the language "determining" may encompass a wide variety of actions, and so may not be limited to the concepts and aspects explicitly described or illustrated by the present disclosure. In some contexts, "determining" may include calculating, computing, processing, measuring, deriving, investigating, looking up (e.g., looking up in a table, a database or another data structure), ascertaining, resolving, selecting, choosing, establishing, and so forth. In some other contexts, "determining" may include communication and/or memory operations/procedures through which information or value(s) are acquired, such as "receiving" (e.g., receiving information), "accessing" (e.g., accessing data in a memory), "detecting," and the like.

As another example, reference to an element in the singular is not intended to mean "one and only one" unless specifically stated, but rather "one or more." Further, terms such as "if," "when," and "while" should be interpreted to mean "under the condition that" rather than imply an immediate temporal relationship or reaction. That is, these phrases, e.g., "when," do not imply an immediate action in response to or during the occurrence of an action or event, but rather imply that if a condition is met then another action or event will occur, but without requiring a specific or immediate time constraint or direct correlation for the other action or event to occur. The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C.

Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for".

## Claims

1. A method of wireless communication performed by a user equipment, UE, comprising:
receiving (902), from an apparatus, information configuring a repetition pattern of at least one of a common part of a rate-splitting multiple access, RSMA, message or a private part of the RSMA message; wherein the common part of the RSMA message is common to a plurality of UEs and wherein the private part of the RSMA message is specific to the UE; and
receiving (904), from the apparatus, at least one repetition of the at least one of the common part of the RSMA message or the private part of the RSMA message after receiving the information configuring the repetition pattern,
wherein the repetition pattern is based on a priority associated with the at least one of the common part of the RSMA message or the private part of the RSMA message.

2. The method of claim 1, wherein the at least one of the priority on a QoS is included in sidelink control information, SCI.

3. The method of claim 1, wherein the repetition pattern comprises at least one of a first repetition factor associated with the common part of the RSMA message or a second repetition factor associated with the private part of the RSMA message, or wherein the information configuring the repetition pattern is received via at least one of layer 1 , L1, layer 2 , L2, or layer 3 , L3, signalling.

4. The method of claim 1, wherein the repetition pattern depends on whether the common part of the RSMA message includes control information, or
wherein the common part of the RSMA message and the private part of the RSMA message are received on a sidelink channel in one of a same logical channel group or different logical channel groups when the common part of the RSMA message and the private part of the RSMA message are scheduled via a plurality of configured grants.

5. The method of claim 1, further comprising:
transmitting (906), to the apparatus, a request for at least one other repetition of at least one of the common part of the RSMA message or the private part of the RSMA message, wherein the request is multiplexed with hybrid automatic repeat request, HARQ, feedback.

6. A method of wireless communication performed by an apparatus, comprising:
transmitting (1002), to at least one user equipment, UE, information configuring a repetition pattern of at least one of a common part of a rate-splitting multiple access, RSMA, message or a private part of the RSMA message; wherein the common part of the RSMA message is common to a plurality of UEs and wherein the private part of the RSMA message is specific to the UE; and
transmitting (1006), to the at least one UE, at least one repetition of the at least one of the common part of the RSMA message or the private part of the RSMA message according to the repetition pattern,
wherein the repetition pattern is based on a priority associated with the at least one of the common part of the RSMA message or the private part of the RSMA message.

7. The method of claim 6, wherein the at least one of the priority or a QoS is included in sidelink control information, SCI, or
wherein the repetition pattern comprises at least one of a first repetition factor associated with the common part of the RSMA message or a second repetition factor associated with the private part of the RSMA message, or
wherein the information configuring the repetition pattern is transmitted via at least one of layer 1, L1, layer 2, L2, or layer 3, L3, signalling, or
wherein the repetition pattern depends on whether the common part of the RSMA message includes control information, or
wherein the common part of the RSMA message and the private part of the RSMA message are transmitted on a sidelink channel in one of a same logical channel group or different logical channel groups when the common part of the RSMA message and the private part of the RSMA message are scheduled via a plurality of configured grants.

8. The method of claim 6, further comprising:
receiving (1008), from the at least UE, a request associated with at least one other repetition of at least one of the common part of the RSMA message or the private part of the RSMA message; and
transmitting (1010), to the at least one UE, the at least one other repetition of the at least one of the common part of the RSMA message or the private part of the RSMA message associated with the request, further comprising one of the following:
wherein the request is multiplexed with hybrid automatic repeat request, HARQ, feedback, or
wherein the request indicates a repetition factor for the at least one other repetition of the at least one of the common part of the RSMA message or the private part of the RSMA message.

9. The method of claim 6, further comprising:
setting (1004) a reference signal received power, RSRP, threshold associated with at least one of a first priority of the common part of the RSMA message, a second priority of the private part of the RSMA message, or a third priority of another message, wherein the RSRP threshold is set based on a highest priority of the first priority, the second priority, or the third priority.

10. An apparatus for wireless communication, comprising:
means for receiving (1140), from a transmitter, information configuring a repetition pattern of at least one of a common part of a rate-splitting multiple access, RSMA, message or a private part of the RSMA message; and
means for receiving (1130), from the transmitter, at least one repetition of the at least one of the common part of the RSMA message or the private part of the RSMA message after receiving the information configuring the repetition pattern,
wherein the repetition pattern is based on a priority associated with the at least one of the common part of the RSMA message or the private part of the RSMA message.

11. The apparatus of claim 10, further comprising means for performing a method according to any of claim 2 to 5.

12. An apparatus for wireless communication, comprising:
means for transmitting (1234), to at least one user equipment, UE, information configuring a repetition pattern of at least one of a common part of a rate-splitting multiple access, RSMA, message or a private part of the RSMA message; and
means for transmitting (1234), to the at least one UE, at least one repetition of the at least one of the common part of the RSMA message or the private part of the RSMA message according to the repetition pattern,
wherein the repetition pattern is based on a priority associated with the at least one of the common part of the RSMA message or the private part of the RSMA message.

13. The apparatus of claim 12, further comprising means for performing a method according to any of claims 7 to 9.

## Patentansprüche

1. Ein Verfahren zur drahtlosen Kommunikation, das von einem Benutzergerät, UE, durchgeführt wird, umfassend:
Empfangen (902), von einer Vorrichtung, von Information, die ein Wiederholungsmuster von mindestens einem von einem gemeinsamen Teil einer Rate-Splitting Multiple Access, RSMA, Nachricht oder einem privaten Teil der RSMA Nachricht konfiguriert; wobei der gemeinsame Teil der RSMA Nachricht einer Vielzahl von UEs gemeinsam ist und wobei der private Teil der RSMA Nachricht spezifisch für das UE ist; und
Empfangen (904), von der Vorrichtung, von mindestens einer Wiederholung des mindestens einen von dem gemeinsamen Teil der RSMA Nachricht oder dem privaten Teil der RSMA Nachricht nach dem Empfangen der Information, die das Wiederholungsmuster konfiguriert,
wobei das Wiederholungsmuster auf einer Priorität basiert, die mit dem mindestens einen von dem gemeinsamen Teil der RSMA Nachricht oder dem privaten Teil der RSMA Nachricht assoziiert ist.

2. Verfahren gemäß Anspruch 1, wobei die mindestens eine von der Priorität oder einer QoS in Sidelink Control Information, SCI, enthalten ist.

3. Verfahren gemäß Anspruch 1, wobei das Wiederholungsmuster mindestens einen von einem ersten Wiederholungsfaktor, der mit dem gemeinsamen Teil der RSMA Nachricht assoziiert ist, oder einem zweiten Wiederholungsfaktor, der mit dem privaten Teil der RSMA Nachricht assoziiert ist, umfasst, oder
wobei die Information, die das Wiederholungsmuster konfiguriert, über mindestens eines von Schicht 1, L1, Schicht 2, L2, oder Schicht 3, L3, Signalisierung empfangen wird.

4. Verfahren gemäß Anspruch 1, wobei das Wiederholungsmuster davon abhängt, ob der gemeinsame Teil der RSMA Nachricht Steuerinformation enthält, oder
wobei der gemeinsame Teil der RSMA Nachricht und der private Teil der RSMA Nachricht auf einem Sidelink-Kanal in einer von einer gleichen logischen Kanalgruppe oder unterschiedlichen logischen Kanalgruppen empfangen werden, wenn der gemeinsame Teil der RSMA Nachricht und der private Teil der RSMA Nachricht über eine Vielzahl von konfigurierten Gewährungen geplant werden.

5. Verfahren gemäß Anspruch 1, ferner umfassend:
Übertragen (906), an die Vorrichtung, einer Anfrage für mindestens eine andere Wiederholung von mindestens einem von dem gemeinsamen Teil der RSMA Nachricht oder dem privaten Teil der RSMA Nachricht, wobei die Anfrage mit Hybrid Automatic Repeat Request, HARQ, Feedback gemultiplext wird.

6. Ein Verfahren zur drahtlosen Kommunikation, das von einer Vorrichtung durchgeführt wird, umfassend:
Übertragen (1002), an mindestens ein Benutzergerät, UE, von Information, die ein Wiederholungsmuster von mindestens einem von einem gemeinsamen Teil einer Rate-Splitting Multiple Access, RSMA, Nachricht oder einem privaten Teil der RSMA Nachricht konfiguriert; wobei der gemeinsame Teil der RSMA Nachricht einer Vielzahl von UEs gemeinsam ist und wobei der private Teil der RSMA Nachricht spezifisch für das UE ist, und
Übertragen (1006), an das mindestens eine UE, von mindestens einer Wiederholung des mindestens einen von dem gemeinsamen Teil der RSMA Nachricht oder dem privaten Teil der RSMA Nachricht gemäß dem Wiederholungsmuster,
wobei das Wiederholungsmuster auf einer Priorität basiert, die mit dem mindestens einen von dem gemeinsamen Teil der RSMA Nachricht oder dem privaten Teil der RSMA Nachricht assoziiert ist.

7. Verfahren gemäß Anspruch 6, wobei die mindestens eine von der Priorität oder der QoS in Sidelink Control Information, SCI, enthalten ist, oder
wobei das Wiederholungsmuster mindestens einen von einem ersten Wiederholungsfaktor, der mit dem gemeinsamen Teil der RSMA Nachricht assoziiert ist, oder einem zweiten Wiederholungsfaktor, der mit dem privaten Teil der RSMA Nachricht assoziiert ist, umfasst, oder
wobei die Information, die das Wiederholungsmuster konfiguriert, über mindestens eines von Schicht 1 (L1), Schicht 2 (L2) oder Schicht 3 (L3) Signalisierung übertragen wird, oder
wobei das Wiederholungsmuster davon abhängt, ob der gemeinsame Teil der RSMA Nachricht Steuerinformation enthält, oder
wobei der gemeinsame Teil der RSMA Nachricht und der private Teil der RSMA Nachricht auf einem Sidelink-Kanal in einer von einer gleichen logischen Kanalgruppe oder unterschiedlichen logischen Kanalgruppen übertragen werden, wenn der gemeinsame Teil der RSMA Nachricht und der private Teil der RSMA Nachricht über eine Vielzahl von konfigurierten Gewährungen geplant werden.

8. Verfahren gemäß Anspruch 6, ferner umfassend:
Empfangen (1008), von dem mindestens einen UE, einer Anfrage, die mit mindestens einer anderen Wiederholung von mindestens einem von dem gemeinsamen Teil der RSMA Nachricht oder dem privaten Teil der RSMA Nachricht assoziiert ist; und
Übertragen (1010), an das mindestens eine UE, der mindestens einen anderen Wiederholung des mindestens einen von dem gemeinsamen Teil der RSMA Nachricht oder dem privaten Teil der RSMA Nachricht, die mit der Anfrage assoziiert ist, ferner umfassend eines von Folgendem:
wobei die Anfrage mit Hybrid Automatic Repeat Request, HARQ, Feedback gemultiplext wird, oder
wobei die Anfrage einen Wiederholungsfaktor für die mindestens eine andere Wiederholung des mindestens einen von dem gemeinsamen Teil der RSMA Nachricht oder dem privaten Teil der RSMA Nachricht anzeigt.

9. Verfahren gemäß Anspruch 6, ferner umfassend:
Einstellen (1004) eines Referenzsignalempfangsleistungs-, RSRP, Schwellenwerts, der mit mindestens einem von einer ersten Priorität des gemeinsamen Teils der RSMA Nachricht, einer zweiten Priorität des privaten Teils der RSMA Nachricht oder einer dritten Priorität einer anderen Nachricht assoziiert ist, wobei der RSRP Schwellenwert basierend auf einer höchsten Priorität der ersten Priorität, der zweiten Priorität oder der dritten Priorität eingestellt wird.

10. Eine Vorrichtung zur drahtlosen Kommunikation, umfassend:
Mittel zum Empfangen (1140), von einem Sender, von Information, die ein Wiederholungsmuster von mindestens einem von einem gemeinsamen Teil einer Rate-Splitting Multiple Access, RSMA, Nachricht oder einem privaten Teil der RSMA Nachricht konfiguriert; und
Mittel zum Empfangen (1130), von dem Sender, von mindestens einer Wiederholung des mindestens einen von dem gemeinsamen Teil der RSMA Nachricht oder dem privaten Teil der RSMA Nachricht nach dem Empfangen der Information, die das Wiederholungsmuster konfiguriert,
wobei das Wiederholungsmuster auf einer Priorität basiert, die mit dem mindestens einen von dem gemeinsamen Teil der RSMA Nachricht oder dem privaten Teil der RSMA Nachricht assoziiert ist.

11. Vorrichtung gemäß Anspruch 10, ferner umfassend Mittel zum Durchführen eines Verfahrens gemäß einem der Ansprüche 2 bis 5.

12. Eine Vorrichtung zur drahtlosen Kommunikation, umfassend:
Mittel zum Übertragen (1234), an mindestens ein Benutzergerät, UE, von Information, die ein Wiederholungsmuster von mindestens einem von einem gemeinsamen Teil einer Rate-Splitting Multiple Access, RSMA, Nachricht oder einem privaten Teil der RSMA Nachricht konfiguriert; und
Mittel zum Übertragen (1234), an das mindestens eine UE, von mindestens einer Wiederholung des mindestens einen von dem gemeinsamen Teil der RSMA Nachricht oder dem privaten Teil der RSMA Nachricht gemäß dem Wiederholungsmuster,
wobei das Wiederholungsmuster auf einer Priorität basiert, die mit dem mindestens einen von dem gemeinsamen Teil der RSMA Nachricht oder dem privaten Teil der RSMA Nachricht assoziiert ist.

13. Vorrichtung gemäß Anspruch 12, ferner umfassend Mittel zum Durchführen eines Verfahrens gemäß einem der Ansprüche 7 bis 9.

## Revendications

1. Un procédé de communication sans fil réalisé par un équipement utilisateur, UE, comprenant :
la réception (902), à partir d'un appareil, d'une information configurant un modèle de répétition d'au moins l'une parmi une partie commune d'un message d'accès multiple à répartition de débit, RSMA, ou une partie privée du message RSMA, dans lequel la partie commune du message RSMA est commune à une pluralité d'UE et dans lequel la partie privée du message RSMA est spécifique à l'UE ; et
la réception (904), à partir de l'appareil, d'au moins une répétition de l'au moins une parmi la partie commune du message RSMA ou la partie privée du message RSMA après réception de l'information configurant le modèle de répétition,
dans lequel le modèle de répétition est basé sur une priorité associée à l'au moins une parmi la partie commune du message RSMA ou la partie privée du message RSMA.

2. Le procédé selon la revendication 1, dans lequel l'au moins une parmi la priorité ou une QoS est incluse dans une information de contrôle sidelink, SCI.

3. Le procédé selon la revendication 1, dans lequel le modèle de répétition comprend au moins un parmi un premier facteur de répétition associé à la partie commune du message RSMA ou un second facteur de répétition associé à la partie privée du message RSMA, ou
dans lequel l'information configurant le modèle de répétition est reçue via au moins l'une parmi une signalisation de couche 1, L1, de couche 2, L2, ou de couche 3, L3.

4. Le procédé selon la revendication 1, dans lequel le modèle de répétition dépend du fit que la partie commune du message RSMA inclut ou non des informations de contrôle, ou
dans lequel la partie commune du message RSMA et la partie privée du message RSMA sont reçues sur un canal sidelink dans l'un parmi un même groupe de canaux logiques ou des groupes de canaux logiques différents lorsque la partie commune du message RSMA et la partie privée du message RSMA sont planifiées via une pluralité d'autorisations configurées.

5. Le procédé selon la revendication 1, comprenant en outre :
la transmission (906), à l'appareil, d'une requête pour au moins une autre répétition d'au moins l'une parmi la partie commune du message RSMA ou la partie privée du message RSMA, dans lequel la requête est multiplexée avec un retour de requête de répétition automatique hybride, HARQ.

6. Un procédé de communication sans fil réalisé par un appareil, comprenant :
la transmission (1002), à au moins un équipement utilisateur, UE, d'une information configurant un modèle de répétition d'au moins l'une parmi une partie commune d'un message d'accès multiple à répartition de débit, RSMA, ou une partie privée du message RSMA, dans lequel la partie commune du message RSMA est commune à une pluralité d'UE et dans lequel la partie privée du message RSMA est spécifique à l'UE ; et
la transmission (1006), à l'au moins un UE, d'au moins une répétition de l'au moins une parmi la partie commune du message RSMA ou la partie privée du message RSMA selon le modèle de répétition,
dans lequel le modèle de répétition est basé sur une priorité associée à l'au moins une parmi la partie commune du message RSMA ou la partie privée du message RSMA.

7. Le procédé selon la revendication 6, dans lequel l'au moins une parmi la priorité ou une QoS est incluse dans une information de contrôle sidelink, SCI, ou
dans lequel le modèle de répétition comprend au moins un parmi un premier facteur de répétition associé à la partie commune du message RSMA ou un second facteur de répétition associé à la partie privée du message RSMA, ou
dans lequel l'information configurant le modèle de répétition est transmise via au moins l'une parmi une signalisation de couche 1, L1, de couche 2, L2, ou de couche 3, L3, ou
dans lequel le modèle de répétition dépend de la condition si la partie commune du message RSMA inclut des informations de contrôle, ou
dans lequel la partie commune du message RSMA et la partie privée du message RSMA sont transmises sur un canal sidelink dans l'un parmi un même groupe de canaux logiques ou des groupes de canaux logiques différents lorsque la partie commune du message RSMA et la partie privée du message RSMA sont planifiées via une pluralité d'autorisations configurées.

8. Le procédé selon la revendication 6, comprenant en outre :
la réception (1008),à partir de l'au moins UE, d'une requête associée à au moins une autre répétition d'au moins l'une parmi la partie commune du message RSMA ou la partie privée du message RSMA ; et
la transmission (1010), à l'au moins un UE, de l'au moins une autre répétition de l'au moins une parmi la partie commune du message RSMA ou la partie privée du message RSMA associée à la requête, comprenant en outre l'une des propositions suivantes :
dans lequel la requête est multiplexée avec un retour de requête de répétition automatique hybride, HARQ, ou
dans lequel la requête indique un facteur de répétition pour l'au moins une autre répétition de l'au moins une parmi la partie commune du message RSMA ou la partie privée du message RSMA.

9. Le procédé selon la revendication 6, comprenant en outre :
l'établissement (1004) d'un seuil de puissance reçue de signal de référence, RSRP, associé à au moins l'une parmi une première priorité de la partie commune du message RSMA, une deuxième priorité de la partie privée du message RSMA, ou une troisième priorité d'un autre message, dans lequel le seuil RSRP est établi sur la base d'une priorité la plus élevée parmi la première priorité, la deuxième priorité, ou la troisième priorité.

10. Un appareil pour la communication sans fil, comprenant :
un moyen pour recevoir (1140), à partir d'un émetteur, une information configurant un modèle de répétition d'au moins l'une parmi une partie commune d'un message d'accès multiple à répartition de débit, RSMA, ou une partie privée du message RSMA ; et
un moyen pour recevoir (1130), à partir de l'émetteur, au moins une répétition de l'au moins l'une parmi la partie commune du message RSMA ou la partie privée du message RSMA après réception de l'information configurant le modèle de répétition,
dans lequel le modèle de répétition est basé sur une priorité associée à l'au moins une parmi la partie commune du message RSMA ou la partie privée du message RSMA.

11. L'appareil selon la revendication 10, comprenant en outre des moyens pour réaliser un procédé selon l'une des revendications 2 à 5.

12. Un appareil pour la communication sans fil, comprenant :
un moyen pour transmettre (1234), à au moins un équipement utilisateur, UE, une information configurant un modèle de répétition d'au moins l'une parmi une partie commune d'un message d'accès multiple à répartition de débit, RSMA, ou une partie privée du message RSMA ; et
un moyen pour transmettre (1234), à l'au moins un UE, au moins une répétition de l'au moins une parmi la partie commune du message RSMA ou la partie privée du message RSMA selon le modèle de répétition,
dans lequel le modèle de répétition est basé sur une priorité associée à l'au moins une parmi la partie commune du message RSMA ou la partie privée du message RSMA.

13. L'appareil selon la revendication 12, comprenant en outre des moyens pour réaliser un procédé selon l'une des revendications 7 à 9.
